# EUROPÄISCHE PATENTSCHRIFT

(11) **EP 3 309 199 B1**
(45) Veröffentlichungstag und Bekanntmachung des Hinweises auf die Patenterteilung: **01.04.2020**
(21) Anmeldenummer: 16193590.3
(22) Anmeldetag: 12.10.2016
(51) Int. Cl.: C08K 7/14, C08K 5/20, C08K 5/526, C08L 77/02, C08L 77/06

(54) **GLASFÜLLER-VERSTÄRKTE POLYAMID-FORMMASSEN AUF BASIS AMORPHER COPOLYAMIDE**
GLASS FILLER REINFORCED POLYAMIDE MOLDING MATERIALS BASED ON AMORPHOUS COPOLYAMIDES
MASSES DE FORMAGE POLYAMIDE RENFORCÉES DE CHARGE DE VERRE SUR BASE DE COPOLYAMIDE AMORPHE

(43) Veröffentlichungstag der Anmeldung: 18.04.2018
(73) Patentinhaber: EMS-PATENT AG, 7013 Domat / Ems (CH)
(72) Erfinder: Aepli, Etienne, 7013 Domat/Ems (CH); Hoffmann, Botho, 7013 Domat/Ems (CH)
(74) Vertreter: Pfenning, Meinig & Partner mbB

(56) Entgegenhaltungen:
- EP-A2- 1 930 373
- US-A1- 2010 076 155

## Beschreibung

Die vorliegende Erfindung betrifft mit einem Glasfüller verstärkte Polyamid-Formmassen, die einen geringen Haze aufweisen und Formkörper aus diesen Polyamid-Formmassen. Diese Polyamid-Formmassen basieren auf amorphen Copolyamiden, wobei genau ein amorphes Copolyamid in einer Polyamid-Formmasse enthalten ist.

Für viele Anwendungen von Kunststoff-Formmassen werden neben sehr guten mechanischen Eigenschaften auch sehr gute optische Eigenschaften gefordert. Um die mechanischen Kennwerte einer Kunststoff-Formmasse zu verbessern, haben sich insbesondere Glasfüller bewährt. Das Erreichen von sehr guten optischen Eigenschaften in mit einem Glasfüller verstärkten Kunststoff-Formmassen stellt nach wie vor eine große Herausforderung dar.

WO 2006/089663 A1 betrifft ein Kunststoffkomposit wenigstens enthaltend einen transparenten Kunststoff und Glas, wobei der Unterschied der Brechungsindizes des Kunststoffs und des Glases im Wellenlängenbereich von 400 bis 700 nm maximal 0.006 beträgt. Als Kunststoffe werden insbesondere Polycarbonate verwendet.

EP 2 169 008 A1 beschreibt amorphe Polyamidharz-Zusammensetzungen umfassend ein Harz, umfassend ein amorphes Polyamidharz und einen Glasfüller, der sich wie folgt zusammensetzt: 68 bis 74 Gew.-% Siliziumdioxid, 2 bis 5 Gew.-% Aluminiumoxid, 2 bis 5 Gew.-% Boroxid, 2 bis 10 Gew.-% Calciumoxid, 0 bis 5 Gew.-% Zinkoxid, 0 bis 5 Gew.-% Strontiumoxid, 0 bis 1 Gew.-% Bariumoxid, 1 bis 5 Gew.-% Magnesiumoxid, 0 bis 5 Gew.-% Lithiumoxid, 5 bis 12 Gew.-% Natriumoxid und 0 bis 10 Gew.-% Kaliumoxid, wobei die Gesamtmenge an Lithiumoxid, Natriumoxid und Kaliumoxid 8 bis 12 Gew.% beträgt.

WO 2015/132510 A1 betrifft die Verwendung mindestens eines teilkristallinen Polyamids in einem amorphen Polyamidharz, welches mit einem Glasfüller verstärkt ist, um eine Polyamidzusammensetzung zu erhalten, welche eine höhere Transparenz aufweist als das vorerwähnte Harz. Weiterhin werden transparente Polyamid-Zusammensetzungen beschrieben, die zwischen 5 und 40 Gew.-% eines teilkristallinen Polyamids, 20 bis 80 Gew.-% zumindest eines amorphen, transparenten und zumindest teilweise cycloaliphatischen Polyamids, 5 bis 40 Gew.-% Glasfüller und optional 0 bis 5 Gew.-% PEBA enthalten.

Die aus dem Stand der Technik bekannten Formmassen erreichen durch eine aufwendige Einstellung des Brechungsindex des Glasfüllers oder durch Zumischen eines teilkristallinen Polyamids die angestrebten optische Eigenschaften und lassen nur geringe Variationen bei der Auswahl des Glasfüllers zu oder fordern die zwingende Verwendung eines teilkristallinen Polyamids in der Formmasse.

Daraus ergibt sich für die vorliegende Erfindung die Aufgabe eine Formmasse bereitzustellen, die sehr gute mechanische und optische Eigenschaften, insbesondere einen tiefen Haze, aufweist. Eine Teilaufgabe besteht außerdem darin auch eine große Flexibilität bezüglich der Auswahl des Glasfüllers zu ermöglichen. Weiterhin soll der Zusatz teilkristalliner Polyamide zwar möglich aber nicht obligatorisch sein, um die gewünschten optischen Eigenschaften zu erreichen.

Diese Aufgabe wird gemäß der vorliegenden Erfindung durch eine Polyamid-Formmasse mit den Merkmalen des Anspruchs 1 und den Formkörpern mit den Merkmalen des Anspruchs 16 gelöst. Die weiteren abhängigen Ansprüche zeigen vorteilhafte Weiterbildungen auf.

Erfindungsgemäß wird eine Polyamid-Formmasse bereitgestellt, welche die folgenden Komponenten enthält:
a) 50 bis 95 Gew.-% eines einzigen amorphen Copolyamids, aufgebaut aus den folgenden Monomeren,
   a1) 0,1 bis 47,9 Mol-% mindestens eines Diamins ausgewählt aus der Gruppe bestehend aus Bis(4-amino-3-methyl-cyclohexyl)methan, Bis(4-amino-cyclohexyl)methan, Bis(4-amino-3-ethyl-cyclohexyl)methan, Bis(4-amino-3,5-dimethyl-cyclohexyl)methan, 2,2-Bis(p-amino-cyclohexyl)propan, 1,3-Bis(aminomethyl)cyclohexan, 1,4-Bis(aminomethyl)cyclohexan, 1,3-Diaminocyclohexan, 1,4-Diaminocyclohexan, Bis(4-amino-2,3-dimethyl-cyclohexyl)methan, Isophorondiamin, 1,6-Diamino-2,2,4-Trimethylhexan, 1,6-Diamino-2,4,4-Trimethylhexan, 2,5-Bis(aminomethyl)norbornan, 2,6-Bis(aminomethyl)norbornan, 2,5-Diaminonorbornan, 2,6-Diaminonorbornan und Mischungen hiervon,
   a2) 0,1 bis 40 Mol-% 1,6-Hexandiamin,
   a3) 9 bis 48 Mol-% Isophthalsäure,
   a4) 0 bis 24 Mol-% Terephthalsäure,
   a5) 4 bis 35 Mol-% Laurinlactam,
   a6) 0 bis 30 Mol-% von a1) bis a5) verschiedener weiterer Monomere,
   wobei der molare Gehalt an Isophthalsäure a3) mindestens gleich dem Gehalt an Terephthalsäure a4) ist, und
   wobei die Summe der Monomere a1) bis a6) 100 Mol-% ergibt, und wobei Überschüsse an Diamin-Monomeren oder an Dicarbonsäure-Monomeren von maximal 3 % zulässig sind,
b) 5 bis 50 Gew.-% mindestens eines Glasfüllers,
c) 0 bis 15 Gew.-% mindestens eines monomeren Lactams und/oder Polyamid 12,
d) 0 bis 19 Gew.-% Zusatzstoffe,
wobei die Summe der Komponenten a) bis d) 100 Gew.-% ergibt.

Überraschenderweise wurde gefunden, dass Polyamid-Formmassen gemäß obiger Definition, die ein einziges amorphes Copolyamid enthalten einen signifikant verbesserten Haze gegenüber Polyamid-Formmassen aufweisen, welche bezüglich Art und Menge der Komponenten a) bis d) und optionaler weiterer Komponenten keine Unterschiede zur 1. Polyamid-Formmasse aufweisen, sich aber dahingehend unterscheiden, dass die Monomere a1) bis a6) nicht genau ein Copolyamid bilden, sondern ein Blend aus einem oder mehreren Polyamiden und/oder einem oder mehreren Copolyamiden gebildet aus diesen Monomeren vorliegt.

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 1874-1:2010 (D) festgelegten. Die darin verwendeten Abkürzungen werden im folgenden Synonym zu den IUPAC Namen der Monomere verwendet, insbesondere kommen folgende Abkürzungen für Monomere vor MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), EACM für Bis(4-amino-3-ethyl-cyclohexyl)methan (auch als 3,3'-Diethyl-4,4'-diaminodicyclohexylmethan bezeichnet, CAS-Nr. 1064114-65-3), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), PACP für 2,2-Bis(p-amino-cyclohexyl)propan (CAS-Nr. 3377-24-0), MC für 1,3-Bis-(aminomethyl)-cyclohexan (CAS-Nr. 2579-20-6), T für Terephthalsäure (CAS-Nr. 100-21-0), I für Isophthalsäure (CAS-Nr. 121-95-5), 6 für 1,6-Hexandiamin (CAS-Nr. 124-09-4) und 12 für Laurinlactam (CAS-Nr. 947-04-6).

Gemäß der vorliegenden Erfindung stellt Komponente a) "ein einziges" Copolyamid dar, welches aus den Monomeren a1) bis a6) aufgebaut sein kann, wobei die Monomere a1), a2), a3) und a5) zwingend vorhanden sind, und welches keine von a1) bis a6) abweichenden Monomere enthält. Dabei gilt die 1. Maßgabe, dass die Summe der Monomere a1) bis a6) 100 Mol-% ergibt. Die festgelegten Bereiche der Mengenangaben für die einzelnen Monomere a1) bis a6) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Monomere a1) bis a6) 100 Mol-% ergibt.

Als 2. Maßgabe gilt, dass die Summe aller Diamin-Monomere "im Wesentlichen" der Summe aller Dicarbonsäure-Monomere entspricht. Der Begriff "im Wesentlichen" lässt dabei Überschüsse der Diamin-Monomere oder der Dicarbonsäure-Monomere von maximal 3 %, bevorzugt maximal 2 % und besonders bevorzugt maximal 1 % zu. Ein 3 %-iger Überschuss der Dicarbonsäure meint dabei beispielsweise, dass das molare Verhältnis von Dicarbonsäuren zu Diaminen 1,03 : 1 beträgt.

Weiterhin gilt als 3. Maßgabe, dass der molare Gehalt an Isophtalsäure a3) mindestens gleich dem Gehalt an Terephthalsäure a4) ist.

Die Mengenangaben bezüglich der Monomere a1) bis a6) sind dabei so zu verstehen, dass sich ein entsprechendes Molverhältnis dieser bei der Polykondensation eingesetzten Monomere auch in den durch Polykondensation hergestellten Copolyamiden wiederfindet.

Die erfindungsgemäßen Copolyamide enthalten neben Dicarbonsäuren und Diaminen auch Lactame zu X Mol-%, daher beträgt die Summe aller Diamine nur noch (50 - 0,5 X) Mol-% und die Summe aller Dicarbonsäuren (50 - 0,5 X) Mol-%, bezogen auf 100 Mol-% Copolyamid.

Die Polyamid-Formmassen gemäß der vorliegenden Erfindung enthalten die Komponenten a) bis d), es gilt dabei die Maßgabe, dass sich die Komponenten a) bis d) in Summe auf 100 Gew.-% ergänzen. Die festgelegten Bereiche der Mengenangaben für die einzelnen Komponenten a) bis d) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten a) bis d) 100 Gew.-% ergibt.

Der "Haze" beschreibt das Streuverhalten eines Stoffes, im Rahmen der vorliegenden Erfindung wird unter dem "Haze" der an einem aus der Polyamid-Formmasse hergestellten Formkörper (2 mm dicke Platten mit Breite und Länge: 60 x 60 mm) nach ASTM D1003 gemessene "Haze" verstanden.

Unter der "Lichttransmission" wird im Sinne der vorliegenden Erfindung die an einem aus der Polyamid-Formmasse hergestellten Formkörper (2 mm dicke Platten mit Breite und Länge: 60 x 60 mm) nach ASTM D1003 gemessene Lichttransmission verstanden.

### Komponente a)

Die Polyamid-Formmasse gemäß der vorliegenden Erfindung enthält als Komponente a) 50 bis 95 Gew.-% eines einzigen amorphen Copolyamids. Diese Mengenangabe ist bezogen auf die Gesamtmasse der Polyamid-Formmasse.

Gemäß einer bevorzugten Ausführungsform der vorliegenden Erfindung enthält die Polyamid-Formmasse die Kompontente a) in 55 bis 89,8 Gew.-%, bevorzugt 65 bis 82.5 Gew.-% und besonders bevorzugt 70 bis 78 Gew.-% bezogen auf die Gesamtmasse der Polyamid-Formmasse.

Bei dem amorphen Copolyamid a) ist bezüglich der Schmelzwärme ein Copolyamid bevorzugt, welches eine nach ISO 11357 bestimmte Schmelzwärme von maximal 5 J/g, bevorzugt von maximal 3 J/g und besonders bevorzugt von 0 bis 1 J/g aufweist.

Die Glasübergangstemperatur des amorphen Copolyamids a) gemessen nach ISO 11357 beträgt bevorzugt 110 bis 220 °C, besonders bevorzugt 130 bis 200 °C, noch weiter bevorzugt 140 bis 185 °C.

Die relative Viskosität des amorphen Copolyamids a) gemessen nach ISO 307 mit 0,5 g Polymer in 100 ml m-Kresol bei 20 °C beträgt vorzugsweise 1,40 bis 2,2, bevorzugt 1,45 bis 2,0, besonders bevorzugt 1,50 bis 1,90 und ganz besonders bevorzugt 1,55 bis 1,85.

Die Einstellung der relativen Viskosität und damit der Molmasse kann in an sich bekannter Weise, z.B. über monofunktionelle Amine oder Carbonsäuren, und/oder difunktionelle Diamine oder Dicarbonsäuren als Kettenregler erfolgen. Bevorzugte monofunktionelle Kettenregler für die erfindungsgemäßen Copolyamide sind Benzoesäure, Essigsäure, Propionsäure, Buttersäure, Valeriansäure, Capronsäure, Laurinsäure, Stearinsäure, 2-Ethylhexansäure, Cyclohexansäure, Propylamin, Butylamin, Pentylamin, Hexylamin, 2-Ethylhexylamin, n-Octylamin, n-Nonylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, Anilin oder Triacetondiamin. Die Kettenregler können einzeln oder in Kombination verwendet werden. Es können auch andere monofunktionelle Verbindungen als Kettenregler eingesetzt werden, die mit einer Amino- oder Säuregruppe reagieren können wie Anhydride, Isocyanate, Säurehalogenide oder Ester. Die übliche Einsatzmenge der monofunktionellen Kettenregler liegt zwischen 10 und 200 mmol pro kg Copolyamid.

Das amorphe Copolyamid a) kann aus den Monomeren a1) bis a6) aufgebaut sein. Die Monomere a1) bis a3 sowie a5) sind dabei zwingend enthalten und das Copolyamid a) enthält keine von a1) bis a6) abweichenden Monomere.

Monomer a1) ist ein Diamin ausgewählt aus der Gruppe bestehend aus Bis(4-amino-3-methyl-cyclohexyl)methan, Bis(4-amino-cyclohexyl)methan, Bis(4-amino-3-ethyl-cyclohexyl)methan, Bis(4-amino-3,5-dimethyl-cyclohexyl)-methan, 2,2-Bis(p-amino-cyclohexyl)propan und 1,3-Bis(aminomethyl)cyclohexan 1,4-Bis(aminomethyl)cyclohexan, 1,3-Diaminocyclohexan, 1,4-Diaminocyclohexan, Bis(4-amino-2,3-dimethyl-cyclohexyl)methan, Isophorondiamin, 1,6-Diamino-2,2,4-Trimethylhexan, 1,6-Diamino-2,4,4-Trimethylhexan, 2,5-Bis(aminomethyl)norbornan, 2,6-Bis(aminomethyl)norbornan, 2,5-Diaminonorbornan, 2,6-Diaminonorbornan und Mischungen hiervon.

Der Anteil von Monomer a1) am Copolyamid a) beträgt dabei 0,1 bis 47,9 Mol-%. Die bevorzugten Bereiche für den Anteil des Monomers a1) am Copolyamid a) hängen vom gewählten Diamin bzw. den gewählten Diaminen a1) sowie von den übrigen im Copolyamid a) enthaltenen Monomeren ab und sind beispielsweise 5 bis 44,5 Mol-%, 18,5 bis 39 Mol-%, 22 bis 31 Mol-%, 22 bis 30 Mol-%, 22 bis 29 Mol-% oder 24 bis 29 Mol-%.

Monomer a2) ist 1,6-Hexandiamin, welches in 0,1 bis 40 Mol-% im Copolyamid a) enthalten ist. Die bevorzugten Bereiche für den Anteil von Monomer a2) am Copolyamid a) hängen von den übrigen im Copolyamid a) enthaltenen Monomeren ab und sind beispielsweise 0,5 bis 30 Mol-%, 5 bis 22 Mol-%, 9 bis 20 Mol-%, 11 bis 22 Mol-%, 12 bis 20 Mol-% oder 11 bis 17 Mol-%.

Monomer a3) ist Isophthalsäure, welche in 0,9 bis 48 Mol-% im Copolyamid a) enthalten ist. Die bevorzugten Bereiche für den Anteil von Monomer a3) am Copolyamid a) hängen von den übrigen im Copolyamid a) enthaltenen Monomeren ab und sind beispielsweise 16 bis 45 Mol-%, 20,25 bis 44 Mol-%, 22 bis 26 Mol-%, 22 bis 25 Mol-%, 20,25 bis 21,75 Mol-% oder 20,5 bis 21,5 Mol-%.

Monomer a4) ist Terephthalsäure, welche optional im Copolyamid a) enthalten sein kann, wobei der Maximalanteil bei 24 Mol-% liegt. Die bevorzugten Bereiche für den Anteil von Monomer a4) am Copolyamid a) hängen von den übrigen im Copolyamid a) enthaltenen Monomeren ab und sind beispielsweise 0 bis 22,5 Mol-%, 0 bis 22 Mol-%, 20,25 bis 21,75 Mol-%, 20,5 bis 21,5 Mol-% oder 18 bis 19 Mol-%.

Monomer a5) ist Laurinlactam, welches in 4 bis 35 Mol-% im Copolyamid a) enthalten ist. Die bevorzugten Bereiche für den Anteil von Monomer a5) am Copolyamid a) hängen von den übrigen im Copolyamid a) enthaltenen Monomeren ab und sind beispielsweise 10 bis 20 Mol-%, 12 bis 19 Mol-%, 13 bis 19 Mol-% oder 14 bis 18 Mol-%.

Monomer a6) stellt ein von den Monomeren a1) bis a5) verschiedenes Monomer dar und ist optional im Copolyamid a) enthalten, wobei sein Maximalanteil bei 30 Mol-% liegt. Das weitere Monomer a6) ist bevorzugt ausgewählt aus der Gruppe bestehend aus meta-Xylylendiamin, para-Xylylendiamin, linearen oder verzweigten aliphatischen Diaminen mit 6 bis 22 Kohlenstoffatomen, linearen oder verzweigten aliphatischen Dicarbonsäuren mit 4 bis 22 Kohlenstoffatomen, cycloaliphatischen Dicarbonsäuren mit 6 bis 22 Kohlenstoffatomen, Naphthalindicarbonsäure, dimeren Fettsäuren mit 36, 44 oder 54 Kohlenstoffatomen, Lactamen mit 4 bis 11 Kohlenstoffatomen oder Lactamen mit 13 bis 15 Kohlenstoffatomen, ω-Aminosäuren mit 4 bis 15 Kohlenstoffatomen und Mischungen daraus. Die bevorzugten Bereiche für den Anteil von Monomer a6) am Copolyamid a) hängen von der Art des gewählten Monomers a6) sowie den übrigen im Copolyamid a) enthaltenen Monomeren ab und sind beispielsweise 0 bis 15 Mol-%.

Besonders bevorzugt ist das weitere Monomer a6) ausgewählt aus der Gruppe bestehend aus meta-Xylylendiamin, para-Xylylendiamin, 1,9-Nonandiamin, 1,10-Decandiamin, 1,12-Dodecandiamin, 1,14-Tetradecandiamin, 1,18-Octadecandiamin, 1,9-Nonandisäure, 1,10-Decandisäure, 1,12-Dodecandisäure, 1,14-Tetradecandisäure, 1,18-Octadecandisäure, 2,6-Naphthalindicarbonsäure, 1,3-Cyclohexandicarbonsäure, 1,4-Cyclohexandicarbonsäure, Phenylindandicarbonsäure, Phenylendioxydiessigsäure, Dimerfettsäure mit 36 oder 44 C-Atomen, Caprolactam, ω-Aminosäuren mit 6 oder 11 Kohlenstoffatomen und Mischungen daraus.

Ganz besonders bevorzugt ist das weitere Monomer a6) ausgewählt aus der Gruppe bestehend aus 1,10-Decandiamin, 1,12-Dodecandiamin, 1,14-Tetradecandiamin, 1,18-Octadecandiamin, 1,10-Decandisäure, 1,12-Dodecandisäure, 1,14-Tetradecandisäure, 1,18-Octadecandisäure, 1,3-Cyclohexandicarbonsäure und Mischungen daraus.

Ein bevorzugtes Copolyamid a) gemäß der vorliegenden Erfindung wird aus folgenden Monomeren aufgebaut:
a1) 5 bis 44,5 Mol-% mindestens eines Diamins ausgewählt aus der Gruppe bestehend aus Bis(4-amino-3-methyl-cyclohexyl)methan, Bis(4-aminocyclohexyl)methan, Bis(4-amino-3-ethyl-cyclohexyl)methan, Bis(4-amino-3,5-dimethyl-cyclohexyl)methan, 2,2-Bis(p-aminocyclohexyl)propan und Mischungen hiervon,
a2) 0,5 bis 30 Mol-% 1,6-Hexandiamin,
a3) 16 bis 45 Mol-% Isophthalsäure,
a4) 0 bis 22,5 Mol-% Terephthalsäure,
a5) 10 bis 20 Mol-% Laurinlactam,
a6) 0 bis 15 Mol-% von a1) bis a5) verschiedener weiterer Monomere,
wobei der molare Gehalt an Isophthalsäure a3) mindestens gleich dem Gehalt an Terephthalsäure a4) ist, und wobei die Summe der Monomere a1) bis a6) 100 Mol-% ergibt, und wobei Überschüsse an Diamin-Monomeren oder an Dicarbonsäure-Monomeren von maximal 3 % zulässig sind.

Ein weiteres bevorzugtes Copolyamid a) gemäß der vorliegenden Erfindung wird aus folgenden Monomeren aufgebaut:
a1) 18,5 bis 39 Mol-% mindestens eines Diamins ausgewählt aus der Gruppe bestehend aus Bis(4-amino-3-methyl-cyclohexyl)methan, Bis(4-amino-cyclohexyl)methan, Bis(4-amino-3,5-dimethylcyclohexyl)methan und Mischungen hiervon,
a2) 5 bis 22 Mol-% 1,6-Hexandiamin,
a3) 20,25 bis 44 Mol-% Isophthalsäure,
a4) 0 bis 22 Mol-% Terephthalsäure,
a5) 12 bis 19 Mol-% Laurinlactam,
wobei der molare Gehalt an Isophthalsäure a3) mindestens gleich dem Gehalt an Terephthalsäure a4) ist, und wobei die Summe der Monomere a1) bis a5) 100 Mol-% ergibt, und wobei Überschüsse an Diamin-Monomeren oder an Dicarbonsäure-Monomeren von maximal 3 % zulässig sind.

Ein besonders bevorzugtes Copolyamid a) gemäß der vorliegenden Erfindung wird aus folgenden Monomeren aufgebaut:
a1) 22 bis 31 Mol-% Bis(4-amino-3-methyl-cyclohexyl)methan und 0,1 bis 2,0 Mol-% Bis(4-amino-cyclohexyl)methan,
a2) 9 bis 20 Mol-% 1,6-Hexandiamin,
a3) 20,25 bis 21,75 Mol-% Isophthalsäure,
a4) 20.25 bis 21.75 Mol-% Terephthalsäure,
a5) 13 bis 19 Mol-% Laurinlactam,
wobei der molare Gehalt an Isophthalsäure a3) mindestens gleich dem Gehalt an Terephthalsäure a4) ist, und wobei die Summe der Monomere a1) bis a5) 100 Mol-% ergibt, und wobei Überschüsse an Diamin-Monomeren oder an Dicarbonsäure-Monomeren von maximal 3 % zulässig sind.

Ein weiteres besonders bevorzugtes Copolyamid a) gemäß der vorliegenden Erfindung wird aus folgenden Monomeren aufgebaut:
a1) 24 bis 29 Mol-% Bis(4-amino-3-methyl-cyclohexyl)methan und 0,5 bis 1,5 Mol-% Bis(4-amino-cyclohexyl)methan,
a2) 11 bis 17 Mol-% 1,6-Hexandiamin,
a3) 20,5 bis 21,5 Mol-% Isophthalsäure,
a4) 20,5 bis 21,5 Mol-% Terephthalsäure,
a5) 14 bis 18 Mol-% Laurinlactam,
wobei der molare Gehalt an Isophthalsäure a3) mindestens gleich dem Gehalt an Terephthalsäure a4) ist, und wobei die Summe der Monomere a1) bis a5) 100 Mol-% ergibt, und wobei Überschüsse an Diamin-Monomeren oder an Dicarbonsäure-Monomeren von maximal 3 % zulässig sind.

Ein anderes besonders bevorzugtes Copolyamid a) gemäß der vorliegenden Erfindung wird aus folgenden Monomeren aufgebaut:
a1) 22 bis 30 Mol-% Bis(4-amino-3-methyl-cyclohexyl)methan,
a2) 11 bis 22 Mol-% 1,6-Hexandiamin,
a3) 22 bis 26 Mol-% Isophthalsäure,
a4) 18 bis 19 Mol-% Terephthalsäure,
a5) 13 bis 19 Mol-% Laurinlactam,
wobei die Summe der Monomere a1) bis a5) 100 Mol-% ergibt, und wobei Überschüsse an Diamin-Monomeren oder an Dicarbonsäure-Monomeren von maximal 3 % zulässig sind.

Ein weiteres besonders bevorzugtes Copolyamid a) gemäß der vorliegenden Erfindung wird aus folgenden Monomeren aufgebaut:
a1) 22 bis 29 Mol-% Bis(4-amino-3-methyl-cyclohexyl)methan,
a2) 12 bis 20 Mol-% 1,6-Hexandiamin,
a3) 22 bis 25 Mol-% Isophthalsäure,
a4) 18 bis 19 Mol-% Terephthalsäure,
a5) 14 bis 18 Mol-% Laurinlactam,
wobei die Summe der Monomere a1) bis a5) 100 Mol-% ergibt, und wobei Überschüsse an Diamin-Monomeren oder an Dicarbonsäure-Monomeren von maximal 3 % zulässig sind.

Das amorphe Copolyamid a) zeigt aufgrund seiner Amorphizität in der DSC-Messung nach ISO 11357 keinen Schmelzpunkt.

### Komponente b)

Die erfindungsgemäße Polyamid-Formmasse enthält als Komponente (b) mindestens einen Glasfüller.

Der Glasfüller (b) ist mit 5 bis 50 Gew.-%, bevorzugt mit 10 bis 40 Gew.-% und besonders bevorzugt mit 15 bis 30 Gew.-% enthalten, wobei sich diese Mengenangaben auf die Gesamtmasse der Polyamid-Formmasse bezieht.

Für den Glasfüller (b) kann gemäß der vorliegenden Erfindung grundsätzlich eine beliebige Glaszusammensetzung ausgewählt werden.

Der Glasfüller ist bevorzugt ausgewählt aus der Gruppe bestehend aus Fasern, gemahlenen Fasern, Partikeln, Flakes, Kugeln, Hohlkugeln und Mischungen hiervon, bevorzugt bestehend aus Fasern, Partikeln, Flakes und Mischungen davon.

Der Glasfüller kann oberflächenbehandelt sein. Dies kann mit einem geeigneten Schlichte- oder Haftvermittlersystem geschehen. Dazu können zum Beispiel Systeme auf Basis von Fettsäuren, Wachsen, Silanen, Titanaten, Polyamiden, Urethanen, Polyhydroxyethern, Epoxiden, Nickel respektive Kombinationen oder Mischungen davon verwendet werden. Bevorzugt ist der Glasfüller mit Aminosilanen, Epoxysilanen, Polyamiden oder Mischungen davon oberflächenbehandelt.

Werden als Füller für die Komponente (b) Fasern ausgewählt, dann werden die Glasfasern aus der Gruppe bestehend aus geschnittenen Fasern, Endlosfasern und Mischungen davon ausgewählt, wobei die Fasern einen Querschnitt aufweisen, der rund, oval, elliptisch, eckig oder rechteckig ist.

Das Erscheinungsbild der Glasfasern kann gestreckt oder spiralförmig sein. Die geschnittenen Glasfasern besitzen vorzugsweise eine Faserlänge von 1 bis 25 mm, bevorzugt 1.5 bis 20 mm, besonders bevorzugt 2 bis 12 mm und ganz besonders bevorzugt von 2 bis 8 mm.

Die geschnittenen Glasfasern weisen vorzugsweise einen Durchmesser von 5 bis 20 µm, bevorzugt von 5 bis 15 µm und besonders bevorzugt von 6 bis 12 µm auf.

Werden die Glasfasern als Endlosfasern (Roving) eingesetzt, weisen sie vorzugsweise einen Durchmesser von maximal 20 µm, bevorzugt von maximal 18 µm, besonders bevorzugt von 5 bis 14 µm auf.

Bei flachen Glasfasern beträgt das Aspektverhältnis, d.h. das Verhältnis der Hauptquerschnittsachse zur Nebenquerschnittsachse 1,5 bis 8, bevorzugt 2 bis 6, besonders bevorzugt 3 bis 5.

Die Querschnittsachsen der flachen Glasfasern sind 3 bis 40 µm lang. Bevorzugt beträgt die Länge der Nebenquerschnittsachse 3 bis 20 µm, besonders bevorzugt 4 bis 10 µm und die Länge der Hauptquerschnittsachse 6 bis 40 µm, besonders bevorzugt 12 bis 30 µm.

Zur Verstärkung der erfindungsgemäßen Polyamid-Formmassen können auch Mischungen von Fasern mit kreisförmigem (rundem) und nicht-kreisförmigem (flachem) Querschnitt verwendet werden.

Die Glasfaser kann unabhängig von Länge, Durchmesser oder der Form der Querschnittsfläche ausgewählt sein aus den üblichen Glasfasertypen, d.h. A-Glas, C-Glas, D-Glas, E-Glas, ECR-Glas, M-Glas, R-Glas, S-Glas, T-Glas und Mischungen davon.

Werden als Glasfüller b) Glaskugeln oder Glaspartikel ausgewählt, beträgt deren mittlerer volumetrische Durchmesser (*d*₅₀) 0,3 bis 100 µm, bevorzugt 5 bis 80 µm, besonders bevorzugt 17 bis 70 µm, gemessen mittels Laserbeugung nach ASTM B 822.

### Komponente c)

Die Polyamid-Formmasen kann optional von 0 bis 15 Gew.-% mindestens eines monomeren Lactams und/oder Polyamid 12 bezogen auf das Gesamtgewicht der Polyamid-Formmasse enthalten.

Gemäß einer Ausführungsform der vorliegenden Erfindung liegt der Anteil von Komponente c) in der Polyamid-Formmasse im Bereich von 0,1 bis 10 Gew.-%, bevorzugt 2 bis 9 Gew.-% und besonders bevorzugt 3 bis 7 Gew.% bezogen auf das Gesamtgewicht der Polyamid-Formmasse.

Gemäß einer weiteren Ausführungsform der vorliegenden Erfindung ist das mindestens eine monomere Lactam gemäß Komponente c) Caprolactam oder Laurinlactam.

Nach einer anderen Ausführungsform der vorliegenden Erfindung enthält die Polyamid-Formmasse 0,1 bis 10 Gew.-%, bevorzugt 0,5 bis 6 Gew.-% und besonders bevorzugt 1,5 bis 4 Gew.-%, bezogen auf das Gesamtgewicht der Polyamid-Formmasse, an Laurinlactam in monomerer Form als Komponente c).

Gemäß einer weiteren Ausführungsform der vorliegenden Erfindung enthält die Polyamid-Formmasse 0.1 bis 10 Gew.-%, bevorzugt 1.5 bis 6 Gew.-% und besonders bevorzugt 2 bis 4.5 Gew.-%, bezogen auf das Gesamtgewicht der Polyamid-Formmasse, an Polyamid 12 als Komponente c).

Gemäß einer bevorzugten Ausführungsform der vorliegenden Erfindung enthält die Polyamid-Formmasse kein Polyamid 12 als Komponente c).

### Komponente d)

Die Polyamid-Formmasse kann optional 0 bis 19 Gew.-% Zusatzstoffe enthalten. Die Zusatzstoffe können bevorzugt in einer Menge von 0,1 bis 15 Gew.-%, besonders bevorzugt von 0,3 bis 6 Gew.-%, weiterhin bevorzugt von 0,5 bis 4 Gew.-% enthalten sein, wobei diese Mengenangaben auf das Gesamtgewicht der Polyamid-Formmasse bezogen sind.

Als Zusatzstoff (d) werden solche Stoffe bevorzugt in der erfindungsgemäßen Polyamid-Formmasse eingesetzt, die die optischen Eigenschaften der Polyamid-Formmasse möglichst wenig beeinträchtigen. Vorzugweise sind diese Zusatzstoffe ausgewählt aus der Gruppe bestehend aus anorganischen und organischen Stabilisatoren, insbesondere Antioxidantien, Antiozonantien, Lichtschutzmittel, UV-Stabilisatoren, UV-Absorber oder UV-Blocker, Gleitmitteln, Farbstoffen, Markierungsmitteln, Pigmenten, Ruß, Graphit, photochromen Agenzien, Antistatika, Entformungsmitteln, Kondensationskatalysatoren, Kettenreglern, Entschäumern, Antiblockmitteln, optischen Aufhellern, halogenhaltigen Flammschutzmitteln, halogenfreien Flammschutzmitteln, natürlichen Schichtsilikaten, synthetischen Schichtsilikaten, metallischen Pigmenten, Metallflittern, metallbeschichteten Partikeln, Füllstoffen und Mischungen davon.

Die Zusatzstoffe d) können bei der Herstellung des erfindungsgemäßen Copolyamids und/oder bei der Herstellung der erfindungsgemäßen Polyamid-Formmasse zugegeben werden. Zusatzstoffe wie Kettenregler, Entschäumer oder Kondensationskatalysatoren werden ihrem Zweck entsprechend bevorzugt bereits bei der Herstellung des Copolyamids zugegeben. Wohingegen es bevorzugt ist Additive wie anorganischen und organischen Stabilisatoren, insbesondere Antiozonantien, Lichtschutzmittel, UV-Stabilisatoren, UV-Absorber oder UV-Blocker, Gleitmitteln, Farbstoffen, Markierungsmitteln, Pigmenten, photochromen Agenzien, Antistatika, Entformungsmitteln, Antiblockmitteln, optischen Aufhellern, halogenhaltigen Flammschutzmitteln, halogenfreien Flammschutzmitteln, natürlichen Schichtsilikaten, synthetischen Schichtsilikaten, Füllstoffen erst bei der Herstellung der Polyamidformmasse zuzugeben. Antioxidantien hingegen werden bevorzugt bei beiden Herstellungen, der des erfindungsgemäßen Copolyamids und der der erfindungsgemäßen Polyamid-Formmasse zugegeben.

Besonders bevorzugt sind diese Zusatzstoffe ausgewählt aus der Gruppe bestehend aus anorganischen und organischen Stabilisatoren, insbesondere Antioxidantien, Antiozonantien, Lichtschutzmittel, UV-Stabilisatoren, UV-Absorber oder UV-Blocker, Gleitmitteln, Farbstoffen, Markierungsmitteln, Pigmenten, photochromen Agenzien, Antistatika, Entformungsmitteln, Kondensationskatalysatoren, Kettenreglern, Entschäumern, Antiblockmitteln, optischen Aufhellern, halogenhaltigen Flammschutzmitteln, halogenfreien Flammschutzmitteln, natürlichen Schichtsilikaten, synthetischen Schichtsilikaten, Füllstoffen und Mischungen davon.

Ganz besonders bevorzugt sind diese Zusatzstoffe ausgewählt aus der Gruppe bestehend aus anorganischen und organischen Stabilisatoren, insbesondere Antioxidantien, Antiozonantien, Lichtschutzmittel, UV-Stabilisatoren, UV-Absorber oder UV-Blocker, Gleitmitteln, Farbstoffen, Entformungsmitteln, Kondensationskatalysatoren, Kettenreglern, Entschäumern, optischen Aufhellern und Mischungen davon.

Besonders bevorzugte organische Stabilisatoren umfassen sterisch gehinderte Phenole wie beispielsweise N,N'-hexane-1,6-diylbis(3-(3,5-di-tert.-butyl-4-hydroxyphenylpropionamide)) und gehinderte Aryl-Phosphite wie beispielsweise tris(2,4-di-tert-butylphenyl)phosphite.

### Polyamid-Formmasse

Nach einer bevorzugten Ausführungsform der vorliegenden Erfindung besteht die Polyamid-Formmasse nur aus den oben definierten Komponenten a) bis d).

Gemäß einer weiteren bevorzugten Ausführungsform der vorliegenden Erfindung enthält die Polyamid-Formmasse kein aliphatisches Polyamid, auch nicht als Trägermaterial eines Masterbatches.

Gemäß einer weiteren bevorzugten Ausführungsform der vorliegenden Erfindung ist der an einem aus der Polyamid-Formmasse hergestellten Formkörper (2 mm dicke Platten mit Breite und Länge: 60 x 60 mm) nach ASTM D1003 gemessene Haze der Polyamid-Formmasse, um mindestens 15 %, bevorzugt mindestens 20 % und besonders bevorzugt um 30 % tiefer, als der Haze einer weiteren Polyamid-Formmasse welche bezüglich Art und Menge der Komponenten a) bis d) und optionaler weiterer Komponenten keine Unterschiede zur 1. Polyamid-Formmasse aufweist, sich aber dahingehend unterscheidet, dass die Monomere a1) bis a6) nicht genau ein Copolyamid bilden, sondern ein Blend aus einem oder mehreren Polyamiden und/oder einem oder mehreren Copolyamiden gebildet aus diesen Monomeren vorliegt.

Nach einer anderen bevorzugten Ausführungsform der vorliegenden Erfindung beträgt der an einem aus der Polyamid-Formmasse hergestellten Formkörper (2 mm dicke Platten mit Breite und Länge: 60 x 60 mm) nach ASTM D1003 gemessene Haze maximal 70 %, bevorzugt maximal 50 %, besonders bevorzugt maximal 40 % und ganz besonders bevorzugt maximal 30 %.

Eine weitere bevorzugte Ausführungsform der vorliegenden Erfindung sieht vor, dass die an einem aus der Polyamid-Formmasse hergestellten Formkörper (2 mm dicke Platten mit Breite und Länge: 60 x 60 mm) nach ASTM D1003 gemessene Lichttransmission mindestens 75 %, bevorzugt mindestens 80 % und besonders bevorzugt mindestens 85 % beträgt.

Nach einer anderen bevorzugten Ausführungsform der vorliegenden Erfindung beträgt der an einem aus der Polyamid-Formmasse hergestellten Formkörper (2 mm dicke Platten mit Breite und Länge: 60 x 60 mm) nach ASTM D1003 gemessene Haze maximal 70 %, bevorzugt maximal 50 %, besonders bevorzugt maximal 40 % und ganz besonders bevorzugt maximal 30 % und die an einem aus der Polyamid-Formmasse hergestellten Formkörper (2 mm dicke Platten mit Breite und Länge: 60 x 60 mm) nach ASTM D1003 gemessene Lichttransmission mindestens 75 %, bevorzugt mindestens 80 % und besonders bevorzugt mindestens 85 %.

Eine bevorzugte Polyamid-Formmasse gemäß der vorliegenden Erfindung sieht vor, dass
- der Anteil von Komponente a) in der Polyamid-Formmasse im Bereich von 55 bis 89,8 Gew.-%, bevorzugt 65 bis 82,5 Gew.-% und besonders bevorzugt 70 bis 78 Gew.% bezogen auf das Gesamtgewicht der Polyamid-Formmasse liegt, und/oder
- der Anteil von Komponente b) in der Polyamid-Formmasse im Bereich von 10 bis 40 Gew.-%, bevorzugt 15 bis 30 Gew.-% und besonders bevorzugt 18 bis 25 Gew.% bezogen auf das Gesamtgewicht der Polyamid-Formmasse liegt, und/oder
- der Anteil von Komponente c) in der Polyamid-Formmasse im Bereich von 0,1 bis 10 Gew.-%, bevorzugt 2 bis 9 Gew.-% und besonders bevorzugt 3 bis 7 Gew.% bezogen auf das Gesamtgewicht der Polyamid-Formmasse liegt, und/oder
- der Anteil von Komponente d) in der Polyamid-Formmasse im Bereich von 0,1 bis 15 Gew.-%, bevorzugt 0,5 bis 6 Gew.-% und besonders bevorzugt 1 bis 4 Gew.% bezogen auf das Gesamtgewicht der Polyamid-Formmasse liegt.

Eine bevorzugte Polyamid-Formmasse gemäß der vorliegenden Erfindung weist eine Reißfestigkeit bestimmt nach ISO 527 von mindestens 80 MPa, bevorzugt mindestens 100 MPa und besonders bevorzugt mindestens 120 MPa auf.

Eine weitere bevorzugte Polyamid-Formmasse gemäß der vorliegenden Erfindung weist eine Reißdehnung bestimmt nach ISO 527 von mindestens 1,5 %, bevorzugt mindestens 2,0 % und besonders bevorzugt mindestens 2,5 % auf.

Eine andere bevorzugte Polyamid-Formmasse gemäß der vorliegenden Erfindung weist einen Zug-E-Modul bestimmt nach ISO 527 von mindestens 4 000 MPa, bevorzugt mindestens 5 000 MPa und besonders bevorzugt mindestens 6 000 MPa auf.

Eine weitere bevorzugte Polyamid-Formmasse gemäß der vorliegenden Erfindung weist eine Charpy-Schlagzähigkeit bei 23 °C bestimmt nach ISO 179/2eU von mindestens 20 kJ/m², bevorzugt mindestens 25 kJ/m² und besonders bevorzugt mindesten 28 kJ/m² auf.

Eine andere bevorzugte Polyamid-Formmasse gemäß der vorliegenden Erfindung weist eine Charpy-Kerbschlagzähigkeit bei 23 °C bestimmt nach ISO 179/2eA von mindestens 6,0 kJ/m², bevorzugt mindestens 6,5 kJ/m² und besonders bevorzugt mindestens 7,2 kJ/m² auf.

Weiterhin weist eine bevorzugte Polyamid-Formmasse gemäß der vorliegenden Erfindung eine Reißfestigkeit bestimmt nach ISO 527 von mindestens 80 MPa, bevorzugt mindestens 100 MPa und besonders bevorzugt mindestens 120 MPa und eine Reißdehnung bestimmt nach ISO 527 von mindestens 1,5 %, bevorzugt mindestens 2,0 % und besonders bevorzugt mindestens 2,5 % und einen Zug-E-Modul bestimmt nach ISO 527 von mindestens 4 000 MPa, bevorzugt mindestens 5 000 MPa und besonders bevorzugt mindestens 6 000 MPa und eine Charpy-Schlagzähigkeit bei 23 °C bestimmt nach ISO 179/2eU von mindestens 20 kJ/m², bevorzugt mindestens 25 kJ/m² und besonders bevorzugt mindesten 28 kJ/m² und eine Charpy-Kerbschlagzähigkeit bei 23 °C bestimmt nach ISO 179/2eA von mindestens 6,0 kJ/m², bevorzugt mindestens 6,5 kJ/m² und besonders bevorzugt mindestens 7,2 kJ/m² auf.

Gemäß einer Ausführungsform ist die erfindungsgemäße Polyamid-Formmasse frei von Polyetherblockamiden.

### Polyamid-Formkörper

Weiterhin betrifft die vorliegende Erfindung Formkörper herstellbar aus einer wie oben definierten Polyamid-Formmasse.

Diese Formkörper sind gemäß einer bevorzugten Ausführungsform der vorliegenden Erfindung ausgewählt aus der Gruppe bestehend aus Komponenten von Mobiltelefonen, Tablets, Gehäuse von elektronischen Geräten, Dekorteile in Fahrzeugen und Haushalt, Abdeckungen, Sichtflächen, hinterleuchtete Komponenten, Blenden, Behälter, Fahrzeugschlüssel, Freizeit und Outdoorartikel.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet:

### Relative Viskosität

Die relative Viskosität wurde gemäß ISO 307 bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Glasübergangstemperatur (Tg), Schmelzwärme und Schmelzpunkt

Die Bestimmung der Glasübergangstemperatur und des Schmelzpunkts erfolgte nach ISO 11357 an Granulat.

Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Glasübergangstemperatur (Tg), Schmelzwärme und Schmelzpunkt wurden bei der zweiten Aufheizung bestimmt.

Als Schmelzpunkt wurde die Temperatur am Peakmaximum angegeben. Der Mittelpunkt des Glasübergangsbereichs, welcher als Glasübergangstemperatur (Tg) angegeben wurde, wurde nach der Methode "Half Height" ermittelt.

### Haze und Lichttransmission

Der Haze und die Lichttransmission wurden bei 23 °C gemäß der ASTM D 1003 an 2 mm dicken Platten (Breite und Länge: 60 x 60 mm) auf einem "Haze Gard plus" der Firma Byk Gardner mit CIE Lichtart C ermittelt. Der Lichttransmissionswert wurde in % der eingestrahlten Lichtmenge angegeben.

### Zug-E-Modul

Der Zug E-Modul wurde gemäß ISO 527 bei 23 °C mit einer Zuggeschwindigkeit von 1 mm/min an einem ISO-Zugstab, Typ A1 (Masse: 170 x 20/10 x 4 mm) hergestellt nach Norm: ISO/CD 3167, bestimmt.

### Reißfestigkeit und Reißdehnung

Die Bestimmung von Reißfestigkeit und Reißdehnung wurden gemäß ISO 527 bei 23 °C mit einer Zuggeschwindigkeit von 5 mm/min an einem ISO-Zugstab, Typ A1 (Masse 170 x 20/10 x 4 mm), hergestellt gemäß der Norm ISO/CD 3167, durchgeführt.

### Schlagzähigkeit nach Charpy

Die Bestimmung der Schlagzähigkeit nach Charpy wurde gemäß ISO 179/2*eU (* 2 = instrumentiert) bei 23 °C an einem ISO-Prüfstab, Typ B1 (Masse 80 x 10 x 4 mm), hergestellt gemäß der Norm ISO/CD 3167, durchgeführt.

### Kerbschlagzähigkeit nach Charpy

Die Bestimmung der Kerbschlagzähigkeit nach Charpy wurde gemäß ISO 179/2eA (* 2 = instrumentiert) bei 23 °C an einem ISO-Prüfstab, Typ B1 (Masse 80 x 10 x 4 mm), hergestellt gemäß der Norm ISO/CD 3167, durchgeführt.

### Herstellung der Prüfkörper

Die Prüfkörper wurden auf einer Spritzgussmaschine der Firma Arburg, Modell Allrounder 420 C 1000-250 mit einer 3-Zonen-Standard-Schnecke mit einem Durchmesser von 25 mm hergestellt. Dabei wurden vom Einzug zur Düse auf- und absteigende Zylindertemperaturen von 290 /310/300 °C verwendet. Die Werkzeugtemperatur betrug 80 °C bei der Herstellung der ISO-Zugstäbe und ISO-Prüfstäbe. Zur Herstellung der Platten zur Bestimmung von Haze und Lichttransmission wurde ein poliertes Werkzeug und eine Werkzeugtemperatur von 120 °C verwendet.

Die Prüfkörper wurden in trockenem Zustand verwendet; dazu wurden sie nach dem Spritzguss mindestens 48 h bei Raumtemperatur in trockener Umgebung, d.h. über Silicagel gelagert.

### 2 Verwendete Materialien

Die in den Beispielen verwendeten Monomere werden in Tabelle 1 zusammengefasst.

**Tabelle 1: In den Beispielen verwendete Monomere.**

| **Monomer** | CAS-Nr**.** | **Schmelzbereich [°C]** | **Handelsname** | **Hersteller** |
|---|---|---|---|---|
| 1,6-Hexandiamin | 124-09-4 | 39 bis 42 | - | BASF SE, Deutschland |
| Bis(4-amino-3-methyl-cyclohexyl)-methan | 6864-37-5 | -7 bis - 0.6* | Laromin C260 | BASF SE, Deutschland |
| Bis(4-aminocyclohexyl)-methan | 1761-71-3 | - 16 bis 46 | 4,4'-Diaminodicyclohexylmethan | BASF SE, Deutschland |
| Terephthalsäure | 100-21-0 | > 400 | - | CEPSA, Spanien |
| Isophthalsäure | 121-91-5 | 345 bis 348 | - | Flint Hills Resources, Schweiz |
| Laurinlactam | 947-04-6 | 152 | - | EMS-CHEMIE AG, Schweiz |

| | | | | |
|---|---|---|---|---|
| * Gefrierbereich nach ASTM D1015-55. | | | | |

Tabelle 2 gibt einen Überblick der in den Vergleichsbeispielen verwendeten Polyamide.

**Tabelle 2: In den Vergleichsbeispielen verwendete Polyamide.**

| **Komponenten** | **Beschreibung** | **Hersteller** |
|---|---|---|
| Polyamid 1 | amorphes Polyamid MACMI/MACMT/12 im Molverhältnis 38/38/24 aus Bis(3-methyl-4-amino-cyclohexyl)methan, Isophthalsäure, Terephthalsäure und Laurinlactam | EMS-CHEMIE AG, Schweiz |
| | RV 1,53 (gemessen mit 0,5 g in 100 ml m-Kresol bei 20 °C) | |
| | Glasübergangstemperatur 194 °C | |
| | Zug-E-Modul 1600 MPa (trocken, 23 °C) | |
| Polyamid 2 | amorphes Polyamid 6I/6T/MACMI/MACMT/PACMI/PACMT/12 | EMS-CHEMIE AG, Schweiz |
| | im Molverhältnis 39/39/7.1/7.1/2.5/2.5/2.8 aus 1,6-Hexandiamin, Bis(3-methyl-4-aminocyclohexyl)methan, Bis(4-amino-cyclohexyl)methan, Isophthalsäure, Terephthalsäure und Laurinlactam | |
| | RV 1,62 (gemessen mit 0,5 g in 100 ml m-Kresol bei 20 °C) | |
| | Glasübergangstemperatur 159 °C | |
| | Zug-E-Modul 2800 MPa (trocken, 23 °C) | |
| Polyamid 3 | amorphes Polyamid 6I/6T aus Hexamethylendiamin, Isophthalsäure und Terephthalsäure | EMS-CHEMIE AG, Schweiz |
| | Molverhältnis Isophthalsäure : Terephthalsäure 2 : 1 | |
| | RV 1,54 (gemessen mit 0,5 g in 100 ml m-Kresol bei 20 °C) | |
| | Glasübergangstemperatur 125 °C | |
| | Zug-E-Modul 3000 MPa (trocken, 23 °C) | |

| | | |
|---|---|---|
| RV = relative Viskosität, gemessen an einer Lösung aus 0,5 g Polyamid in 100 ml m-Kresol bei 20 °C. | | |

Tabelle 3 fasst die weiteren in den Beispielen und Vergleichsbeispielen verwendeten Materialien zusammen.

**Tabelle 3: In den Beispielen und Vergleichsbeispielen verwendete Materialien.**

| **Komponenten** | **Beschreibung** | **Handelsname** | **Hersteller** |
|---|---|---|---|
| Polyamid 12 | Polyamid 12 aus Laurinlactam | - | EMS-CHEMIE AG, Schweiz |
| | RV 1,58 (gemessen mit 0,5 in 100 ml m-Kresol bei 20 °C) | | |
| | Schmelzpunkt 178 °C | | |
| Laurinlactam | 12-Laurinlactam | - | EMS-CHEMIE AG, Schweiz |
| | Schmelzpunkt 152 °C | | |
| Glasfaser 1 | flache Glasfaser, 3 mm lang, | Nittobo | Nitto Boseki Co., LTD., Japan Chongqing Polycomp International Corp., China |
| | Hauptquerschnittachse 28 µm, | CSG3PA-820 | |
| | Nebenquerschnittachse 7 µm, | | |
| | Aspektverhältnis der Querschnittachsen = 4 | | |
| Glasfaser 2 | flache Glasfaser, 3 mm lang, | | |
| | Hauptquerschnittachse 12 - 14 µm, | CPIC | |
| | Nebenquerschnittachse 6 - 8 µm | ECS 301T-3 | |
| Glasfaser 3 | runde Glasfaser, 4.5 mm lang, | Vetrotex | Saint-Gobain Vetrotex, Frankreich |
| | Durchmesser 10 µm | 995 EC10-4.5 | |
| Antioxidans 1 | N,N'-Hexan-1,6-diylbis[3-(3,5-di-tert-butyl-4-hydroxyphenyl-propionamid | Irganox 1098 | BASF SE, Deutschland |
| Antioxidans 2 | Tris(2,4-ditert-butylphenyl)phosphit | Irgafos 168 | BASF SE, Deutschland |

### 3 Beispiele und Vergleichsbeispiele

### 3.1 Allgemeine Herstellungvorschrift für die erfindungsgemäßen Copolyamide

Die Herstellung der erfindungsgemäßen transparenten Copolyamide erfolgt auf an sich bekannte Weise in bekannten, rührbaren Druckautoklaven mit einem Vorlagegefäß und einem Reaktionsgefäß:
Im Vorlagegefäß wird deionisiertes Wasser vorgelegt und die Monomere und etwaige Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 260 bis 330 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2 Stunden auf atmosphärischen Druck reduziert, wobei die Temperatur leicht sinken kann. In der folgenden Entgasungsphase wird der Ansatz bei atmosphärischem Druck für 0,5 bis 2,5 Stunden auf einer Temperatur von 270 bis 330 °C gehalten. Die Polymerschmelze wird in Strangform ausgetragen, im Wasserbad bei 15 bis 80 °C abgekühlt und granuliert. Das Granulat wird bei 80 bis 120 °C unter Stickstoff oder im Vakuum auf einen Wassergehalt von weniger als 0,1 Gew.-% getrocknet.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate. Die Katalysatoren werden im Bereich von 0,01 bis 0,5 Gew.-%, bevorzugt 0,03 bis 0,1 Gew.-%, bezogen auf das Polyamid, zugegeben.

Geeignete Entschäumer zur Vermeidung der Schaumbildung während der Entgasung sind wässrige, 10 %-ige Emulsionen, die Silicone oder Siliconderivate enthalten und in Mengen von 0,01 bis 1,0 Gew.-%, bevorzugt 0,01 bis 0,10 Gew.-%, bezogen auf das Polyamid, eingesetzt werden.

### 3.2 Allgemeine Herstellungsvorschrift für die Polyamid-Formmassen

Zur Herstellung der erfindungsgemäßen Polyamid-Formmasse werden die Komponenten a) und b) und gegebenenfalls c) und d) auf üblichen Compoundiermaschinen, wie z.B. ein- oder zweiwelligen Extrudern oder Schneckenknetern gemischt. Die Komponenten werden dabei einzelnen über gravimetrische Dosierwaagen in den Einzug oder jeweils in einen Sidefeeder dosiert oder in Form eines Dryblends zugeführt. Die Komponente b) (Glasfüller) wird bevorzugt über einen Sidefeeder in die Polymerschmelze dosiert.

Werden Zusatzstoffe (Komponente d) verwendet, können diese direkt oder in Form eines Masterbatches eingebracht werden. Bei dem Trägermaterial des Masterbatches handelt es sich bevorzugt um ein Polyamid oder ein Polyolefin. Unter den Polyamiden eignen sich dazu besonders das Polyamid der jeweiligen Komponenten a), PA 6, PA 11, PA 12, PA 69, PA 6/69, oder PA 6/12.

Zur Dryblend-Herstellung werden das getrocknete Granulat der Komponente a) und gegebenenfalls die Komponenten b) bis d) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 250 bis 320 °C, wobei die Temperatur des ersten Zylinders unter 100 °C eingestellt werden kann. Vor der Düse kann Vakuum angelegt oder atmosphärisch entgast werden. Die Schmelze wird in Strangform ausgetragen, im Wasserbad bei 10 bis 80 °C abgekühlt und anschließend granuliert. Das Granulat wird bei 80 bis 120 °C unter Stickstoff oder im Vakuum auf einen Wassergehalt von unter 0,1 Gew.-% getrocknet.

Die Verarbeitung der erfindungsgemäßen Polyamid-Formmassen im Spritzguss erfolgt bei Zylindertemperaturen von 250 bis 320 °C, wobei ein vom Einzug zur Düse hin auf- und absteigendes Temperaturprofil verwendet werden kann. Die Werkzeugtemperatur wird auf eine Temperatur von 60 bis 140 °C, bevorzugt 70 bis 120 °C eingestellt.

### 3.3 Herstellung des in den Beispielen 4, 5, 7 und 9 verwendeten Copolyamids

Im Folgenden wird die Herstellung eines erfindungsgemäßen Copolyamids an Hand des in den Beispielen 4, 5, 7 und 9 verwendeten PA 6I/6T/MACMI/MACMT/PACMI/PACMT/12 erläutert:
Im Vorlagegefäss eines 300 l Druckautoklaven wurden 35 kg deionisiertes Wasser vorgelegt und 25,34 kg Isophthalsäure, 25,34 kg Terephthalsäure und 18,62 kg Laurinlactam eingerührt. Danach wurden 31,10 kg Bis-(3-methyl-4-aminocyclohexyl)methan (MACM), 18,91 kg 1,6-Hexandiamin, 1,20 kg Bis-(4-aminocyclohexyl)methan (PACM), 72 g Phosphinsäure (50 Gew.-%-ige wässerige Lösung) als Kondensationskatalysator, 35 g Antifoam RD 10 Gew.-% Emulsion als Entschäumer, 12 g Irganox 1098 als Antioxidans, und zum Schluss 520 g Benzoesäure als Kettenregler zugegeben. Daraufhin wurde wie folgt verfahren:
- Nach 10-maliger Inertisierung wurde bis auf 190 °C aufgeheizt. Die homogene Lösung wurde bei 190 °C durch ein Sieb in das Reaktionsgefäß gepumpt.
- Unter Rühren wurde dort der Ansatz auf 290 °C aufgeheizt und 4 Stunden bei 20 bar in der Druckphase gehalten. Innerhalb von 2,5 Stunden wurde auf atmosphärischen Druck entspannt und anschließend bei 290 °C 2 Stunden entgast.
- Die Polymerschmelze wurde ausgetragen, im Wasserbad (20 °C) abgekühlt und granuliert. Das Granulat wurde bei 90 °C im Vakuum (30 mbar) auf einen Wassergehalt von unter 0,1 Gew.-% getrocknet.

Die relative Viskosität des Produkts betrug 1,58, die Glasübergangstemperatur 177 °C.

### 3.4 Herstellung der Polyamid-Formmasse aus Beispiel 5, Tabelle 4

Das getrocknete Granulat des Copolyamids a) PA 6I/6T/MACMI/MACMT/PACMI/PACMT/12 (76,65 Gew.-%, inklusive der darin enthaltenen Additive wie unter 3.3 angegeben) wurde mit den Antioxidantien 1 und 2 (0,25 Gew.-% und 0,1 Gew.-%) und dem Laurinlactam (3 Gew.-%) zu einem Dryblend vermischt. Diese Mischung (40 kg) wurde mittels eines Taumelmischers ca. 20 Minuten lang homogenisiert.

Die Polyamid-Formmasse wurde auf einem Zweiwellen-Extruder der Firma Werner & Pfleiderer Typ ZSK 25 hergestellt. Das Dryblend (80 Gew.-%) wurde dabei über eine Dosierwaage in den Einzug dosiert. Die Glasfaser (20 Gew.-%) - Komponente b) - wurde über einen Sidefeeder 6 Gehäuseeinheiten vor der Düse in die Schmelze gefördert.

Die Temperatur des ersten Gehäuses wurde auf 70 °C eingestellt, diejenige der restlichen Gehäuse auf 290 bis 310 °C. Es wurde eine Drehzahl von 200 U/min und ein Durchsatz von 15 kg/h verwendet und in der dritten Zone vor der Düse im Stickstoffstrom entgast. Die als Strang ausgetragene Polyamid-Formmasse wurde im Wasserbad bei 80 °C abgekühlt, granuliert und das erhaltene Granulat bei 90 °C im Vakuum bei 30 mbar auf einen Wassergehalt von unter 0,1 Gew.-% getrocknet.

Bei der Herstellung der Polyamid-Formmasse aus Beispiel 7, Tabelle 4 wurde entsprechend Verfahren, jedoch dem Dryblend noch 3,85 Gew.-% Polyamid 12 auf Kosten des Anteils des Copolyamids a) zugegeben.

### 3.5 Ergebnisse

Die folgenden Tabellen 4 bis 6 betreffen Beispiele gemäß der vorliegenden Erfindung und die Tabellen 7 bis 11 zeigen Vergleichsbeispiele. Zu den Komponenten b) bis c) wurden in den Tabellen jeweils Mengenangaben in Gewichtsprozent gemacht, auf die Zusatzstoffe d) wird im Text unten eingegangen.

Die Polyamid-Formmassen wurden mit einem Copolyamid a) gemäß der vorliegenden Erfindung (Tabellen 4 bis 6) oder mit verschiedenen Blends aus den Polyamiden 1, 2 und 3 (Tabellen 8 bis 11) ergänzt, so dass das Gesamtgewicht der Polyamid-Formmasse 100 Gew.-% ergab. Tabelle 4 enthält eine Zeile welche das Verhältnis der Monomere aus Polyamid 1 und Polyamid 2 im Copolyamid angibt und die Tabellen 5 und 6 enthalten je eine Zeile welche das Verhältnis der Monomere aus Polyamid 1 und Polyamid 3 im Copolyamid angibt. Dieses Verhältnis wurde angegeben, um eine einfachere Vergleichbarkeit mit den Vergleichsbeispielen zu ermöglichen, die teilweise Blends aus den Polyamiden 1 und 2 bzw. 1 und 3 betreffen. Die Copolyamide wurden aber, wie oben angegeben, durch Umsetzung der Monomere in den in den Tabellen angegebenen Mengen erhalten.

Die Copolyamide der Beispiele 1 bis 22 der Tabellen 4 bis 6 enthalten 0,03 Gew.-% Phosphinsäure (CAS-Nr. 6303-21-5, Hersteller Honeywell Specialty Chemicals, Deutschland) als Kondensationskatalysator, 0,03 Gew.-% Antifoam RD 10 Gew.-% Emulsion (CAS-Nr. 9004-62-0, Hersteller Dow Corning S:A:, Belgien) als Entschäumer und 0,01 Gew.-% Irganox 1098 als Antioxidans, wobei die Mengenangaben auf das Copolyamid bezogen sind.

Bei der Compoundierung der Copolyamide zu den Polyamid-Formmassen der Beispiele 1 bis 22 werden zusätzlich zu den in den Tabellen 4 bis 6 aufgeführten Komponenten noch Irganox 1098 und Irgafos 168 als Antioxidantien hinzugefügt und zwar zu 0,25 Gew.-% und zu 0,1 Gew.-%, bezogen auf die Polyamid-Formmasse.

Die Polyamid-Formmassen der Vergleichsbeispiele 29 bis 54 enthalten zusätzlich zu den in den Tabellen 8 bis 11 aufgeführten Komponenten noch als Antioxidans 1 Irganox 1098 zu 0,25 Gew.-% und als Antioxidans 2 Irgafos 168 zu 0,1 Gew.-%, bezogen auf die Polyamid-Formmasse.

**Tabelle 4: Beispiele mit Copolyamiden aus den Monomeren der Polyamide 1 und 2.**

| **Komponente** | | **Einheit** | **Beispiele** | | | | | | | | |
|---|---|---|---|---|---|---|---|---|---|---|---|
| | | | **1** | **2** | **3** | **4** | **5** | **6** | **7** | **8** | **9** |
| - | Verhältnis der Monomere aus Polyamid 1 und Polyamid 2 im Copolyamid | - | 75:25 | 70:30 | 65:35 | 60:40 | 60:40 | 65:35 | 60:40 | 65:35 | 60:40 |
| a) | 1,6-Hexandiamin | Mol-% | 9,75 | 11,7 | 13,65 | 15,6 | 15,6 | 13,65 | 15,6 | 13,65 | 15,6 |
| | Bis(4-amino-3-methyl-cyclohexyl)-methan | Mol-% | 30,28 | 28,73 | 27,185 | 25,64 | 25,64 | 27,185 | 25,64 | 27,185 | 25,64 |
| | Bis(4-aminocyclohexyl)-methan | Mol-% | 0,62 | 0,75 | 0,875 | 1,0 | 1,0 | 0,875 | 1,0 | 0,875 | 1,0 |
| | Isophthalsäure | Mol-% | 20,325 | 20,59 | 20,855 | 21,12 | 21,12 | 20,855 | 21,12 | 20,855 | 21,12 |
| | Terephthalsäure | Mol-% | 20,325 | 20,59 | 20,855 | 21,12 | 21,12 | 20,855 | 21,12 | 20,855 | 21,12 |
| | Laurinlactam | Mol-% | 18,7 | 17,64 | 16,58 | 15,52 | 15,52 | 16,58 | 15,52 | 16,58 | 15,52 |
| b) | Glasfaser 1 | Gew.-% | 20 | 20 | 20 | 20 | 20 | 20 | 20 | - | - |
| b) | Glasfaser 2 | Gew.-% | - | - | - | - | - | - | - | 20 | 20 |
| c) | Polyamid 12 | Gew.-% | - | - | - | - | - | 3,85 | 3,85 | 3,85 | 3,85 |
| c) | Laurinlactam | Gew.-% | - | - | - | - | 3 | 3 | 3 | 3 | 3 |

| | **Messwerte** | | | | | | | | | | |
|---|---|---|---|---|---|---|---|---|---|---|---|
| - | Haze | % | 59 | 49 | 40 | 39 | 34 | 33 | 27 | 33 | 36 |
| - | Lichttransmission | % | 76 | 81 | 83 | 83 | 85 | 86 | 86 | 79 | 84 |
| - | Zug-E-Modul | MPa | 6480 | 6730 | 6830 | 6830 | 6790 | 7010 | 6700 | 6900 | 6800 |
| - | Reißfestigkeit | MPa | 126 | 131 | 127 | 133 | 133 | 132 | 132 | 142 | 142 |
| - | Reißdehnung | % | 2,8 | 2,8 | 2,5 | 2,6 | 2,7 | 2,5 | 2,6 | 2,7 | 2,9 |
| - | Schlagzähigkeit Charpy 23 °C | kJ/m² | 29 | 29 | 28 | 29 | 38 | 34 | 36 | 37 | 38 |
| - | Kerbschlagzähigkeit Charpy 23 °C | kJ/m² | 7,4 | 8,2 | 7,8 | 8,0 | 8,2 | 9,1 | 8,7 | 9,2 | 9,0 |

**Tabelle 5: Beispiele mit Copolyamiden aus den Monomeren der Polyamide 1 und 3.**

| **Komponente** | | **Einheit** | **Beispiele** | | | | | | | |
|---|---|---|---|---|---|---|---|---|---|---|
| | | | **10** | **11** | **12** | **13** | **14** | **15** | **16** | **17** |
| - | Verhältnis der Monomere aus Polyamid 1 und Polyamid 3 im Copolyamid | - | 75:25 | 70:30 | 75:25 | 70:30 | 65:35 | 60:40 | 60:40 | 55:45 |
| a) | 1,6-Hexandiamin | Mol-% | 12,5 | 15,0 | 12,5 | 15,0 | 17,5 | 20,0 | 20,0 | 22,5 |
| | Bis(4-amino-3-methylcyclohexyl)-methan | Mol-% | 28,5 | 26,6 | 28,5 | 26,6 | 24,7 | 22,8 | 22,8 | 20,9 |
| | Isophthalsäure | Mol-% | 22,59 | 23,305 | 22,59 | 23,305 | 24,0225 | 24,74 | 24,74 | 25,4575 |
| | Terephthalsäure | Mol-% | 18,49 | 18,295 | 18,49 | 18,295 | 18,1775 | 18,06 | 18,06 | 17,9425 |
| | Laurinlactam | Mol-% | 18,0 | 16,8 | 18,0 | 16,8 | 15,6 | 14,4 | 14,4 | 13,2 |
| b) | Glasfaser 1 | Gew.-% | 20 | 20 | - | - | - | - | - | - |
| b) | Glasfaser 2 | Gew.-% | - | - | 20 | 20 | 20 | 20 | - | - |
| b) | Glasfaser 3 | Gew.-% | - | - | - | - | - | - | 20 | 20 |

| | **Messwerte** | | | | | | | | | |
|---|---|---|---|---|---|---|---|---|---|---|
| - | Haze | % | 35 | 30 | 40 | 39 | 41 | 42 | 47 | 48 |
| - | Lichttransmission | % | 85 | 86 | 85 | 82 | 82 | 83 | 82 | 81 |
| - | Zug-E-Modul | MPa | 6110 | 6330 | 6410 | 6900 | 7130 | 7110 | 6570 | 6670 |
| - | Reißfestigkeit | MPa | 123 | 123 | 139 | 140 | 144 | 140 | 134 | 145 |
| - | Reißdehnung | % | 2,9 | 2,7 | 3,4 | 2,8 | 2,9 | 2,6 | 3,0 | 3,1 |
| - | Schlagzähigkeit Charpy 23 °C | kJ/m² | 30 | 30 | 37 | 39 | 38 | 35 | 38 | 36 |
| - | Kerbschlagzähigkeit Charpy 23 °C | kJ/m² | 7,5 | 7,4 | 8,6 | 9,7 | 9,3 | 9,8 | 7,2 | 7,4 |

**Tabelle 6: Beispiele mit Copolyamiden aus den Monomeren der Polyamide 1 und 3.**

| **Komponente** | | **Einheit** | **Beispiele** | | | | |
|---|---|---|---|---|---|---|---|
| | | | **18** | **19** | **20** | **21** | **22** |
| - | Verhältnis der Monomere aus Polyamid 1 und Polyamid 3 im Copolyamid | - | 70:30 | 75:25 | 70:30 | 75:25 | 70:30 |
| a) | 1,6-Hexandiamin | Mol-% | 15,0 | 12,5 | 15,0 | 12,5 | 15,0 |
| | Bis(4-amino-3-methylcyclohexyl)-methan | Mol-% | 26,6 | 28,5 | 26,6 | 28,5 | 26,6 |
| | Isophthalsäure | Mol-% | 23,305 | 22,59 | 23,305 | 22,59 | 23,305 |
| | Terephthalsäure | Mol-% | 18,295 | 18,49 | 18,295 | 18,49 | 18,295 |
| | Laurinlactam | Mol-% | 16,8 | 18,0 | 16,8 | 18,0 | 16,8 |
| b) | Glasfaser 1 | Gew.-% | 20 | 20 | 20 | - | - |
| b) | Glasfaser 2 | Gew.-% | - | - | - | 20 | 20 |
| c) | Polyamid 12 | Gew.-% | - | 3,85 | 3,85 | 3,85 | 3,85 |
| c) | Laurinlactam | Gew.-% | 3 | 3 | 3 | 3 | 3 |

| | **Messwerte** | | | | | | |
|---|---|---|---|---|---|---|---|
| - | Haze | % | 28 | 33 | 27 | 37 | 39 |
| - | Lichttransmission | % | 86 | 87 | 86 | 84 | 83 |
| - | Zug-E-Modul | MPa | 6800 | 6830 | 6870 | 6870 | 7030 |
| - | Reißfestigkeit | MPa | 130 | 136 | 131 | 142 | 144 |
| - | Reißdehnung | % | 2,6 | 2,7 | 2,5 | 2,8 | 2,8 |
| - | Schlagzähigkeit Charpy 23 °C | kJ/m² | 32 | 36 | 39 | 37 | 37 |
| - | Kerbschlagzähigkeit Charpy 23 °C | kJ/m² | 8,2 | 8,9 | 8,5 | 8,8 | 9,1 |

**Tabelle 7: Vergleichsbeispiele mit Polyamid 1, Polyamid 2 oder Polyamid 3 und Glasfasern.**

| **Komponenten** | **Einheit** | **Vergleichsbeispiele** | | | | | |
|---|---|---|---|---|---|---|---|
| | | **23** | **24** | **25** | **26** | **27** | **28** |
| Polyamid 1 | Gew.-% | 80 | - | - | 80 | - | - |
| Polyamid 2 | Gew.-% | - | 80 | - | - | 80 | - |
| Polyamid 3 | Gew.-% | - | - | 80 | - | - | 80 |
| Glasfaser 1 | Gew.-% | 20 | 20 | 20 | - | - | - |
| Glasfaser 2 | Gew.-% | - | - | - | 20 | 20 | 20 |

| **Messwerte** | | | | | | | |
|---|---|---|---|---|---|---|---|
| Haze | % | 91 | 81 | 97 | 94 | 84 | 98 |
| Lichttransmission | % | 86 | 86 | 81 | 85 | 85 | 84 |

**Tabelle 8: Vergleichsbeispiele mit Blends aus Polyamid 1 und Polyamid 2.**

| **Komponenten** | **Einheit** | **Vergleichsbeispiele** | | | | | |
|---|---|---|---|---|---|---|---|
| | | **29** | **30** | **31** | **32** | **33** | **34** |
| Gew.-Verhältnis Polyamid 1 : Polyamid 2 | - | 70 : 30 | 65 : 35 | 60 : 40 | 60 : 40 | 55 : 45 | 50 : 50 |
| Glasfaser 1 | Gew.-% | 20 | 20 | 20 | - | - | - |
| Glasfaser 2 | Gew.-% | - | - | - | 20 | 20 | 20 |

| **Messwerte** | | | | | | | |
|---|---|---|---|---|---|---|---|
| Haze | % | 88 | 91 | 94 | 93 | 95 | 96 |
| Lichttransmission | % | 47 | 45 | 41 | 41 | 40 | 39 |
| Zug-E-Modul | MPa | 6680 | 6800 | 6890 | 6960 | 7020 | 7210 |
| Reißfestigkeit | MPa | 131 | 135 | 136 | 149 | 151 | 152 |
| Reißdehnung | % | 2,7 | 2,6 | 2,7 | 3,1 | 3,1 | 3,1 |
| Schlagzähigkeit Charpy 23 °C | kJ/m² | 26 | 26 | 24 | 43 | 40 | 44 |
| Kerbschlagzähigkeit Charpy 23 °C | kJ/m² | 7,6 | 7,9 | 8,2 | 8,5 | 8,5 | 9,6 |

**Tabelle 9: Vergleichsbeispiele mit Blends aus Polyamid 1, Polyamid 2, Polyamid 12 und Laurinlactam.**

| **Komponenten** | **Einheit** | **Vergleichsbeispiele** | | | | | |
|---|---|---|---|---|---|---|---|
| | | **35** | **36** | **37** | **38** | **39** | **40** |
| Gew.-Verhältnis Polyamid 1 : Polyamid 2 | - | 70:30 | 65:35 | 60:40 | 60:40 | 55:45 | 50:40 |
| Glasfaser 1 | Gew.-% | 20 | 20 | 20 | - | - | - |
| Glasfaser 2 | Gew.-% | - | - | - | 20 | 20 | 20 |
| Polyamid 12 | Gew.-% | 3,85 | 3,85 | 3,85 | 3,85 | 3,85 | 3,85 |
| Laurinlactam | Gew.-% | 3,0 | 3,0 | 3,0 | 3,0 | 3,0 | 3,0 |

| **Messwerte** | | | | | | | |
|---|---|---|---|---|---|---|---|
| Haze | % | 99 | 100 | 100 | 100 | 100 | 100 |
| Lichttransmission | % | 42 | 40 | 39 | 37 | 36 | 34 |

**Tabelle 10: Vergleichsbeispiele mit Blends aus Polyamid 1 und Polyamid 3.**

| **Komponenten** | **Einheit** | **Vergleichsbeispiele** | | | | | | |
|---|---|---|---|---|---|---|---|---|
| | | **41** | **42** | **43** | **44** | **45** | **46** | **47** |
| Gew.-Verhältnis Polyamid 1 : Polyamid 3 | - | 75:25 | 70:30 | 65:35 | 70:30 | 65:35 | 60:40 | 55:45 |
| Glasfaser 1 | Gew.-% | 20 | 20 | 20 | - | - | - | - |
| Glasfaser 2 | Gew.-% | - | - | - | 20 | 20 | 20 | 20 |

| **Messwerte** | | | | | | | | |
|---|---|---|---|---|---|---|---|---|
| Haze | % | 99 | 100 | 100 | 100 | 100 | 100 | 100 |
| Lichttransmission | % | 36 | 32 | 30 | 33 | 29 | 27 | 26 |
| Zug-E-Modul | MPa | 6660 | 6890 | 6950 | 6870 | 7010 | 7160 | 7260 |
| Reißfestigkeit | MPa | 127 | 131 | 133 | 143 | 147 | 152 | 153 |
| Reißdehnung | % | 2,5 | 2,5 | 2,5 | 2,9 | 2,9 | 2,9 | 2,9 |
| Schlagzähigkeit Charpy 23 °C | kJ/m² | 37 | 27 | 27 | 33 | 32 | 36 | 34 |
| Kerbschlagzähigkeit Charpy 23 °C | kJ/m² | 9,0 | 8,4 | 8,8 | 8,7 | 8,5 | 8,7 | 9,3 |

**Tabelle 11: Vergleichsbeispiele mit Blends aus Polyamid 1, Polyamid 3, Polyamid 12 und Laurinlactam.**

| **Komponenten** | **Einheit** | **Vergleichsbeispiele** | | | | | | |
|---|---|---|---|---|---|---|---|---|
| | | **48** | **49** | **50** | **51** | **52** | **53** | **54** |
| Gew.-Verhältnis Polyamid 1 : Polyamid 3 | - | 75:25 | 70:30 | 65:35 | 70:30 | 65:35 | 60:40 | 55:45 |
| Glasfaser 1 | Gew.-% | 20 | 20 | 20 | - | - | - | - |
| Glasfaser 2 | Gew.-% | - | - | - | 20 | 20 | 20 | 20 |
| Polyamid 12 | Gew.-% | 3,85 | 3,85 | 3,85 | 3,85 | 3,85 | 3,85 | 3,85 |
| Laurinlactam | Gew.-% | 3,0 | 3,0 | 3,0 | 3,0 | 3,0 | 3,0 | 3,0 |

| **Messwerte** | | | | | | | | |
|---|---|---|---|---|---|---|---|---|
| Haze | % | 100 | 100 | 100 | 100 | 100 | 100 | 100 |
| Lichttransmission | % | 34 | 33 | 32 | 32 | 29 | 29 | 29 |

Tabelle 12 belegt, dass die in den Tabellen 4 bis 6 angegebenen Monomeranteile für die Copolyamide a) tatsächlich den Blendverhältnissen zwischen den Polyamiden 1 und 2 bzw. 1 und 3 entsprechen.

**Tabelle 12: Berechnung der Monomeranteile im Copolyamid aus dem Blendverhältnis.**

| **Komponente** | **Wiederholungseinheiten [Mol-%]** | | | | | | |
|---|---|---|---|---|---|---|---|
| | **6I** | **6T** | **MACMI** | **MACMT** | **PACMI** | **PACMT** | **12^{a}** |
| Polyamid 1 | - | - | 38 | 38 | - | - | 24 |
| Polyamid 2 | 39 | 39 | 7,1 | 7,1 | 2,5 | 2,5 | 2,8 |
| Polyamid 3 | 66,7 | 33,3 | - | - | - | - | - |

| **Blendverhältnis Polyamid 1 : 2 = 60 : 40 Gew.-teile** | **Wiederholungseinheiten [Mol-%]** | | | | | | |
|---|---|---|---|---|---|---|---|
| | **6I** | **6T** | **MACMI** | **MACMT** | **PACMI** | **PACMT** | **12^{a}** |
| 60 Gew.-teile Polyamid 1 | - | - | 22,8 | 22,8 | - | - | 14,4 |
| 40 Gew.-teile Polyamid 2 | 15,6 | 15,6 | 2,84 | 2,84 | 1,0 | 1,0 | 1,12 |
| Copolyamid | 15,6 | 15,6 | 25,64 | 25,64 | 1,0 | 1,0 | 15,52 |
| | | | | | | | |

| **Monomeranteile** | **Monomere [Mol-%]** | | | | | | |
|---|---|---|---|---|---|---|---|
| | **6** | **MACM** | **PACM** | **I** | **T** | **12^{a}** | |
| Copolyamid | 15,6 | 25,64 | 1,0 | 21,12 | 21,12 | 15,52 | |

| **Blendverhältnis Polyamid 1 : 3 = 70 : 30 Gew.-teile** | **Wiederholungseinheiten [Mol-%]** | | | | | | |
|---|---|---|---|---|---|---|---|
| | **6I** | **6T** | **MACMI** | **MACMT** | **PACMI** | **PACMT** | **12^{a}** |
| 70 Gew.-teile Polyamid 1 | - | - | 26,6 | 26,6 | - | - | 16,8 |
| 30 Gew.-teile Polyamid 3 | 20,01 | 9,99 | - | - | - | - | - |
| Copolyamid | 20,1 | 9,99 | 26,6 | 26,6 | - | - | 16,8 |
| | | | | | | | |

| **Monomeranteile** | **Monomere [Mol-%]** | | | | | | |
|---|---|---|---|---|---|---|---|
| | **6** | **MACM** | **PACM** | **I** | **T** | **12^{a}** | |
| Copolyamid | 15,0 | 26,6 | - | 23,305 | 18,295 | 16,8 | |

| | | | | | | | |
|---|---|---|---|---|---|---|---|
| a) 12 = Laurinlactam. | | | | | | | |

Tabelle 12 zeigt im ersten Teil die Zusammensetzungen der in den Vergleichsbeispielen verwendeten Polyamide 1, 2 und 3 in Mol-% pro Wiederholungseinheit. Die Wiederholungseinheiten 6I, 6T, MACMI, MACMT, PACMI, PACMT und 12 sind dabei in statistischer Anordnung miteinander verknüpft.

Im zweiten Teil der Tabelle 12 wird aus dem Blendverhältnis 60 : 40 von Polyamid 1 : Polyamid 2 der Anteil der Wiederholungseinheiten in Mol-% im entsprechenden Copolyamid berechnet.

Der dritte Teil der Tabelle 12 gibt die aus dem Anteil der Wiederholungseinheiten resultierende Zusammensetzung in Mol-% pro Monomer (1,6-Hexandiamin (6), Bis(4-amino-3-methyl-cyclohexyl)methan (MACM), Bis(4-amino-cyclohexyl)methan (PACM), Isophthalsäure (I), Terephthalsäure (T) und Laurinlactam (12)) des entsprechenden Copolyamids an.

Der vierte und fünfte Teil der Tabelle 12 enthalten die entsprechenden Angaben für das Blendverhältnis 70 : 30 von Polyamid 1 : Polyamid 3.

### 4 Diskussion der Resultate

Den Tabellen 4 bis 6 lässt sich entnehmen, dass alle Polyamid-Formmassen gemäß der erfindungsgemäßen Beispiele 1 bis 22 einen Haze von kleiner als 70 % und eine Lichttransmission von größer als 75 % aufweisen. Tabelle 7 zeigt, dass Polyamid-Formmassen, welche die Polyamide 1 bis 3 enthalten zwar ebenfalls eine gute Lichttransmission aufweisen, der Haze aber sehr hoch und durchweg über 80 % liegt. Die Tabellen 8 bis 11 bilden Polyamid-Formmasen ab, die Blends aus den Polyamid-Formmassen 1 bis 3 enthalten. Für diese Polyamid-Formmassen gemäß den Vergleichsbeispielen 29 bis 54 werden durchweg geringe Werte für die Lichttransmission sowie hohe Werte für den Haze erhalten.

Direkt vergleichen lässt sich z.B. das erfindungsgemäße Beispiel 2 mit dem Vergleichsbeispiel 29. Das Copolyamid gemäß Beispiel 2 weist die gleichen Monomere in den gleichen Mengen auf wie ein Blend der Polyamide 1 und 2 gemäß Vergleichsbeispiel 29. Der Gehalt an Glasfüller und der Typ des Glasfüllers sind ebenfalls in beiden Polyamid-Formmassen identisch. Dennoch unterscheiden sich die Werte für die Lichttransmission (B2: 81 % gegenüber VB29: 47 %) und den Haze (B2: 49 % und B29: 88 %) drastisch. Ähnlich deutliche Unterschiede ergeben sich bei einem Vergleich von Beispiel 3 (Lichttransmission: 83 %, Haze: 40 %) mit Vergleichsbeispiel 30 (Lichttransmission: 45 %, Haze: 91 %) oder Beispiel 4 (Lichttransmission: 83 %, Haze: 39 %) mit Vergleichsbeispiel 31 (Lichttransmission: 41 %, Haze: 94 %).

Durch die Verwendung eines einzigen amorphen Copolyamids lassen sich überraschenderweise mit Glasfüllern verstärkte Polyamid-Formmassen erhalten, die neben einem geringen Haze auch eine hohe Lichttransmission aufweisen.

Weiterhin lässt sich z.B. Tabelle 4 entnehmen, dass der Zusatz von geringen Mengen an Laurinlactam und/oder Polyamid 12 zu den Polyamid-Formmassen ebenfalls einen positiven Einfluss auf die optischen Eigenschaften der Polyamid-Formmasse hat. Dies lässt sich z.B. aus einem Vergleich der Beispiele 4 (enthält weder Polyamid 12 noch Laurinlactam, Lichttransmission: 83 %, Haze: 40 %), 5 (enthält Laurinlactam, Lichttransmission: 83 %, Haze: 39 %) und 6 (enthält Polyamid 12 und Laurinlactam, Lichttransmission: 85 %, Haze: 34 %) entnehmen.

## Patentansprüche

1. Polyamid-Formmasse enthaltend folgende Komponenten:
a) 50 bis 95 Gew.-% eines einzigen amorphen Copolyamids, aufgebaut aus den folgenden Monomeren,
a1) 0,1 bis 47,9 Mol-% mindestens eines Diamins ausgewählt aus der Gruppe bestehend aus Bis(4-amino-3-methyl-cyclohexyl)-methan, Bis(4-amino-cyclohexyl)methan, Bis(4-amino-3-ethyl-cyclohexyl)methan, Bis(4-amino-3,5-dimethyl-cyclohexyl)methan, 2,2-Bis(p-amino-cyclohexyl)propan, 1,3-Bis(aminomethyl)cyclohexan, 1,4-Bis(aminomethyl)cyclohexan, 1,3-Diaminocyclohexan, 1,4-Diaminocyclohexan, Bis(4-amino-2,3-dimethyl-cyclohexyl)methan, Isophorondiamin, 1,6-Diamino-2,2,4-Trimethylhexan, 1,6-Diamino-2,4,4-Trimethylhexan, 2,5-Bis(aminomethyl)norbornan, 2,6-Bis(aminomethyl)norbornan, 2,5-Diaminonorbornan, 2,6-Diaminonorbornan und Mischungen hiervon,
a2) 0,1 bis 40 Mol-% 1,6-Hexandiamin,
a3) 9 bis 48 Mol-% Isophthalsäure,
a4) 0 bis 24 Mol-% Terephthalsäure,
a5) 4 bis 35 Mol-% Laurinlactam,
a6) 0 bis 30 Mol-% von a1) bis a5) verschiedener weiterer Monomere,
wobei der molare Gehalt an Isophthalsäure a3) mindestens gleich dem Gehalt an Terephthalsäure a4) ist, und
wobei die Summe der Monomere a1) bis a6) 100 Mol-% ergibt, und
wobei Überschüsse an Diamin-Monomeren oder an Dicarbonsäure-Monomeren von maximal 3 % zulässig sind,
b) 5 bis 50 Gew.-% mindestens eines Glasfüllers,
c) 0 bis 15 Gew.-% mindestens eines monomeren Lactams und/oder Polyamid 12,
d) 0 bis 19 Gew.-% Zusatzstoffe,
wobei die Summe der Komponenten a) bis d) 100 Gew.-% ergibt.

2. Polyamid-Formmasse nach Anspruch 1, **dadurch gekennzeichnet, dass**
der an einem aus der Polyamid-Formmasse hergestellten Formkörper (2 mm dicke Platten mit Breite und Länge: 60 x 60 mm) nach ASTM D1003 gemessene Haze der Polyamid-Formmasse, um mindestens 15 %, bevorzugt mindestens 20 % und besonders bevorzugt um 30 % tiefer ist, als der Haze einer weiteren Polyamid-Formmasse welche bezüglich Art und Menge der Komponenten a) bis d) und optionaler weiterer Komponenten keine Unterschiede zur 1. Polyamid-Formmasse aufweist, sich aber dahingehend unterscheidet, dass die Monomere a1) bis a6) nicht genau ein Copolyamid bilden, sondern ein Blend aus einem oder mehreren Polyamiden und/oder einem oder mehreren Copolyamiden gebildet aus diesen Monomeren vorliegt.

3. Polyamid-Formmasse nach einem der vorhergehenden Ansprüche,
**dadurch gekennzeichnet, dass**
die weiteren Monomere a6) ausgewählt sind aus der Gruppe bestehend aus meta-Xylylendiamin, para-Xylylendiamin, linearen oder verzweigten aliphatischen Diaminen mit 6 bis 22 Kohlenstoffatomen, linearen oder verzweigten aliphatischen Dicarbonsäuren mit 4 bis 22 Kohlenstoffatomen, cycloaliphatischen Dicarbonsäuren mit 6 bis 22 Kohlenstoffatomen, Naphthalindicarbonsäure, dimeren Fettsäuren mit 36, 44 oder 54 Kohlenstoffatomen, Lactamen mit 4 bis 11 Kohlenstoffatomen oder Lactamen mit 13 bis 15 Kohlenstoffatomen, ω-Aminosäuren mit 4 bis 15 Kohlenstoffatomen und Mischungen daraus.

4. Polyamid-Formmasse nach einem der vorhergehenden Ansprüche, **dadurch gekennzeichnet, dass**
die an einem aus der Polyamid-Formmasse hergestellten Formkörper (2 mm dicke Platten mit Breite und Länge: 60 x 60 mm) nach ASTM D1003 gemessene Transparenz mindestens 75 %, bevorzugt mindestens 80 % und besonders bevorzugt mindestens 85 % beträgt, und/oder
der an einem aus der Polyamid-Formmasse hergestellten Formkörper (2 mm dicke Platten mit Breite und Länge: 60 x 60 mm) nach ASTM D1003 gemessene Haze maximal 70 %, bevorzugt maximal 50 %, besonders bevorzugt maximal 40 % und ganz besonders bevorzugt maximal 30 % beträgt.

5. Polyamid-Formmasse nach einem der vorhergehenden Ansprüche, **dadurch gekennzeichnet, dass**
das Copolyamid a) aus folgenden Monomeren aufgebaut wird:
a1) 5 bis 44,5 Mol-% mindestens eines Diamins ausgewählt aus der Gruppe bestehend aus Bis(4-amino-3-methyl-cyclohexyl)methan, Bis(4-amino-cyclohexyl)methan, Bis(4-amino-3-ethyl-cyclohexyl)methan, Bis(4-amino-3,5-dimethyl-cyclohexyl)methan, 2,2-Bis(p-amino-cyclohexyl)propan und Mischungen hiervon,
a2) 0,5 bis 30 Mol-% 1,6-Hexandiamin,
a3) 16 bis 45 Mol-% Isophthalsäure,
a4) 0 bis 22,5 Mol-% Terephthalsäure,
a5) 10 bis 20 Mol-% Laurinlactam,
a6) 0 bis 15 Mol-% von a1) bis a5) verschiedener weiterer Monomere,
wobei der molare Gehalt an Isophthalsäure a3) mindestens gleich dem Gehalt an Terephthalsäure a4) ist, und
wobei die Summe der Monomere a1) bis a6) 100 Mol-% ergibt, und
wobei Überschüsse an Diamin-Monomeren oder an Dicarbonsäure-Monomeren von maximal 3 % zulässig sind.

6. Polyamid-Formmasse nach einem der vorhergehenden Ansprüche, **dadurch gekennzeichnet, dass**
das Copolyamid aus folgenden Monomeren aufgebaut wird:
a1) 18,5 bis 39 Mol-% mindestens eines Diamins ausgewählt aus der Gruppe bestehend aus Bis(4-amino-3-methyl-cyclohexyl)-methan, Bis(4-amino-cyclohexyl)methan, Bis(4-amino-3,5-dimethyl-cyclohexyl)methan und Mischungen hiervon,
a2) 5 bis 22 Mol-% 1,6-Hexandiamin,
a3) 20,25 bis 44 Mol-% Isophthalsäure,
a4) 0 bis 22 Mol-% Terephthalsäure,
a5) 12 bis 19 Mol-% Laurinlactam,
insbesondere bevorzugt wird das Copolyamid aus folgenden Monomeren aufgebaut:
a1) 22 bis 31 Mol-% Bis(4-amino-3-methyl-cyclohexyl)methan und 0,1 bis 2,0 Mol-% Bis(4-amino-cyclohexyl)methan,
a2) 9 bis 20 Mol-% 1,6-Hexandiamin,
a3) 20,25 bis 21,75 Mol-% Isophthalsäure,
a4) 20,25 bis 21,75 Mol-% Terephthalsäure,
a5) 13 bis 19 Mol-% Laurinlactam,
am bevorzugtesten wird das Copolyamid aus folgenden Monomeren aufgebaut:
a1) 24 bis 29 Mol-% Bis(4-amino-3-methyl-cyclohexyl)methan und 0,5 bis 1,5 Mol-% Bis(4-amino-cyclohexyl)methan,
a2) 11 bis 17 Mol-% 1,6-Hexandiamin,
a3) 20,5 bis 21,5 Mol-% Isophthalsäure,
a4) 20,5 bis 21,5 Mol-% Terephthalsäure,
a5) 14 bis 18 Mol-% Laurinlactam,
wobei der molare Gehalt an Isophthalsäure a3) mindestens gleich dem Gehalt an Terephthalsäure a4) ist, und
wobei die Summe der Monomere a1) bis a5) 100 Mol-% ergibt, und
wobei Überschüsse an Diamin-Monomeren oder an Dicarbonsäure-Monomeren von maximal 3 % zulässig sind.

7. Polyamid-Formmasse nach einem der Ansprüche 1 bis 5, **dadurch gekennzeichnet, dass**
das Copolyamid aus folgenden Monomeren aufgebaut wird:
a1) 22 bis 30 Mol-% Bis(4-amino-3-methyl-cyclohexyl)methan,
a2) 11 bis 22 Mol-% 1,6-Hexandiamin,
a3) 22 bis 26 Mol-% Isophthalsäure,
a4) 18 bis 19 Mol-% Terephthalsäure,
a5) 13 bis 19 Mol-% Laurinlactam,
bevorzugt wird das Copolyamid aus folgenden Monomeren aufgebaut:
a1) 22 bis 29 Mol-% Bis(4-amino-3-methyl-cyclohexyl)methan,
a2) 12 bis 20 Mol-% 1,6-Hexandiamin,
a3) 22 bis 25 Mol-% Isophthalsäure,
a4) 18 bis 19 Mol-% Terephthalsäure,
a5) 14 bis 18 Mol-% Laurinlactam,
wobei die Summe der Monomere a1) bis a5) 100 Mol-% ergibt, und
wobei Überschüsse an Diamin-Monomeren oder an Dicarbonsäure-Monomeren von maximal 3 % zulässig sind.

8. Polyamid-Formmasse nach einem der vorhergehenden Ansprüche, **dadurch gekennzeichnet, dass**
die Polyamid-Formmasse aus den Komponenten a) bis d) besteht.

9. Polyamid-Formmasse nach einem der vorhergehenden Ansprüche, **dadurch gekennzeichnet, dass**
das mindestens eine monomere Lactam gemäß Komponente c) Caprolactam oder Laurinlactam ist, und/oder
die Polyamid-Formmasse 0,1 bis 10 Gew.-%, bevorzugt 0,5 bis 6 Gew.-% und besonders bevorzugt 1,5 bis 4 Gew.-%, bezogen auf das Gesamtgewicht der Polyamid-Formmasse, an Laurinlactam in monomerer Form als Komponente c) enthält, und/oder, dass
die Polyamid-Formmasse 0,1 bis 10 Gew.-%, bevorzugt 1,5 bis 6 Gew.-% und besonders bevorzugt 2 bis 4,5 Gew.-%, bezogen auf das Gesamtgewicht der Polyamid-Formmasse, an Polyamid 12 als Komponente c) enthält.

10. Polyamid-Formmasse nach einem der vorhergehenden Ansprüche **dadurch gekennzeichnet, dass**
die Polyamid-Formmasse mindestens einen Zusatzstoff enthält, insbesondere ausgewählt aus der Gruppe bestehend aus anorganischen und organischen Stabilisatoren, insbesondere Antioxidantien, Antiozonantien, Lichtschutzmittel, UV-Stabilisatoren, UV-Absorber oder UV-Blocker, Gleitmitteln, Farbstoffen, Markierungsmitteln, Pigmenten, Ruß, Graphit, photochromen Agenzien, Antistatika, Entformungsmitteln, Kondensationskatalysatoren, Kettenreglern, Entschäumern, Antiblockmitteln, optischen Aufhellern, halogenhaltigen Flammschutzmitteln, halogenfreien Flammschutzmitteln, natürlichen Schichtsilikaten, synthetischen Schichtsilikaten, metallischen Pigmenten, Metallflittern, metallbeschichteten Partikeln, Füllstoffen, und Mischungen davon.

11. Polyamid-Formmasse nach einem der vorhergehenden Ansprüche, **dadurch gekennzeichnet, dass**
der mindestens eine Glasfüller b) ausgewählt ist aus der Gruppe bestehend aus Fasern, gemahlenen Fasern, Partikeln, Flakes, Kugeln, Hohlkugeln und Mischungen hiervon, bevorzugt bestehend aus Fasern, Partikeln, Flakes und Mischungen davon.

12. Polyamid-Formmasse nach einem der vorhergehenden Ansprüche **dadurch gekennzeichnet, dass**
die Glassorte des Glasfüllers b) ausgewählt ist aus der Gruppe bestehend aus A-Glas, C-Glas, D-Glas, E-Glas, ECR-Glas, M-Glas, R-Glas, S-Glas, T-Glas und Mischungen davon.

13. Polyamid-Formmasse nach einem der vorhergehenden Ansprüche **dadurch gekennzeichnet, dass**
die Fasern des Glasfüllers b) ausgewählt sind aus der Gruppe bestehend aus geschnittenen Fasern, Endlosfasern und Mischungen davon,
wobei die Fasern einen Querschnitt aufweisen, der rund, oval, elliptisch, eckig oder rechteckig ist.

14. Polyamid-Formmasse nach einem der vorhergehenden Ansprüche **dadurch gekennzeichnet, dass**
• der Anteil von Komponente a) in der Polyamid-Formmasse im Bereich von 55 bis 89,8 Gew.-%, bevorzugt 65 bis 82,5 Gew.-% und besonders bevorzugt 70 bis 78 Gew.% bezogen auf das Gesamtgewicht der Polyamid-Formmasse liegt, und/oder
• der Anteil von Komponente b) in der Polyamid-Formmasse im Bereich von 10 bis 40 Gew.-%, bevorzugt 15 bis 30 Gew.-% und besonders bevorzugt 18 bis 25 Gew.% bezogen auf das Gesamtgewicht der Polyamid-Formmasse liegt, und/oder
• der Anteil von Komponente c) in der Formmasse im Bereich von 0,1 bis 10 Gew.-%, bevorzugt 2 bis 9 Gew.-% und besonders bevorzugt 3 bis 7 Gew.% bezogen auf das Gesamtgewicht der Polyamid-Formmasse liegt, und/oder
• der Anteil von Komponente d) in der Polyamid-Formmasse im Bereich von 0,1 bis 15 Gew.-%, bevorzugt 0,5 bis 6 Gew.-% und besonders bevorzugt 1 bis 4 Gew.% bezogen auf das Gesamtgewicht der Polyamid-Formmasse liegt.

15. Polyamid-Formmasse nach einem der vorhergehenden Ansprüche **dadurch gekennzeichnet, dass** die Polyamid-Formmasse
• eine Reißfestigkeit bestimmt nach ISO 527 von mindestens 80 MPa, bevorzugt mindestens 100 MPa und besonders bevorzugt mindestens 120 MPa aufweist, und/oder
• eine Reißdehnung bestimmt nach ISO 527 von mindestens 1,5 %, bevorzugt mindestens 2,0 % und besonders bevorzugt mindestens 2,5 % aufweist, und/oder
• einen Zug-E-Modul bestimmt nach ISO 527 von mindestens 4 000 MPa, bevorzugt mindestens 5 000 MPa und besonders bevorzugt mindestens 6 000 MPa aufweist, und/oder
• eine Charpy-Schlagzähigkeit bei 23 °C bestimmt nach ISO 179/2eU von mindestens 20 kJ/m², bevorzugt mindestens 25 kJ/m² und besonders bevorzugt mindesten 28 kJ/m² aufweist, und/oder
• eine Charpy-Kerbschlagzähigkeit bei 23 °C bestimmt nach ISO 179/2eA von mindestens 6,0 kJ/m², bevorzugt mindestens 6,5 kJ/m² und besonders bevorzugt mindestens 7,2 kJ/m² aufweist.

16. Formkörper herstellbar aus einer Polyamid-Formmasse nach einem der Ansprüche 1 bis 15.

17. Formkörper nach Anspruch 16 **dadurch gekennzeichnet, dass**
der Formkörper ausgewählt ist aus der Gruppe bestehend aus Komponenten von Mobiltelefonen, Tablets, Gehäuse von elektronischen Geräten, Dekorteile in Fahrzeugen und Haushalt, Abdeckungen, Sichtflächen, hinterleuchtete Komponenten, Blenden, Behälter, Fahrzeugschlüssel, Freizeit und Outdoorartikel.

## Claims

1. Polyamide moulding compound comprising the following components:
a) 50 to 95% by weight of a single amorphous copolyamide, composed of the following monomers,
a1) 0.1 to 47.9% by mol of at least one diamine selected from the group consisting of bis(4-amino-3-methylcyclohexyl)methane, bis(4-aminocyclohexyl)methane, bis(4-amino-3-ethylcyclohexyl)methane, bis(4-amino-3,5-dimethylcyclohexyl) methane, 2,2-bis(p-aminocyclohexyl) propane, 1,3-bis(aminomethyl)cyclohexane, 1,4-bis(aminomethyl)cyclohexane, 1,3-diaminocyclohexane, 1,4-diaminocyclohexane, bis(4-amino-2,3-dimethylcyclohexyl) methane, isophorone diamine, 1,6-diamino-2,2,4-trimethylhexane, 1,6-diamino-2,4,4-trimethylhexane, 2,5-bis(aminomethyl)norbornane, 2,6-bis(aminomethyl)norbornane, 2,5-diaminonorbornane, 2,6-diaminonorbornane and mixtures hereof,
a2) 0.1 to 40% by mol of 1,6-hexanediamine,
a3) 9 to 48% by mol of isophthalic acid,
a4) 0 to 24% by mol of terephthalic acid,
a5) 4 to 35% by mol of laurinlactam,
a6) 0 to 30% by mol of a1) to a5) of various further monomers,
the molar content of isophthalic acid a3) being at least equal to the content of terephthalic acid a4), and
the sum of the monomers a1) to a6) producing 100% by mol, and
the sum of all the diamine monomers corresponding substantially to the sum of all the dicarboxylic acid monomers,
b) 5 to 50% by weight of at least one glass filler,
c) 0 to 15% by weight of at least one monomeric lactam and/or polyamide 12,
d) 0 to 19% by weight of additives,
the sum of components a) to d) producing 100% by weight.

2. Polyamide moulding compound according to claim 1, **characterised in that**
the haze of the polyamide moulding compound, which is measured according to ASTM D1003 on a moulded article produced from the polyamide moulding compound (2 mm thick plates with width and length: 60 x 60 mm), is lower by at least 15%, preferably at least 20% and particularly preferably by 30%, than the haze of a further polyamide moulding compound which, with respect to type and quantity of components a) to d) and optional further components, has no differences relative to the 1^{st} polyamide moulding compound, but differs **in that** the monomers a1) to a6) do not exactly form a single copolyamide but rather a blend of one or more polyamides and/or of one or more copolyamides formed from these monomers is present.

3. Polyamide moulding compound according to one of the preceding claims, **characterised in that**
the further monomers a6) are preferably selected from the group consisting of meta-xylylenediamine, para-xylylenediamine, linear or branched aliphatic diamines with 6 to 22 carbon atoms, linear or branched aliphatic dicarboxylic acids with 4 to 22 carbon atoms, cycloaliphatic dicarboxylic acids with 6 to 22 carbon atoms, naphthalenedicarboxylic acid, dimeric fatty acids with 36, 44 or 54 carbon atoms, lactams with 4 to 11 carbon atoms or lactams with 13 to 15 carbon atoms, ω-amino acids with 4 to 15 carbon atoms and mixtures thereof.

4. Polyamide moulding compound according to one of the preceding claims, **characterised in that**
the transparency, which is measured according to ASTM D1003 on a moulded article produced from the polyamide moulding compound (2 mm thick plates with width and length: 60 x 60 mm), is at least 75%, preferably at least 80% and particularly preferably at least 85%, and/or
the haze, which is measured according to ASTM D1003 on a moulded article produced from the polyamide moulding compound (2 mm thick plates with width and length: 60 x 60 mm), is at most 70%, preferably at most 50%, particularly preferably at most 40% and very particularly preferably at most 30%.

5. Polyamide moulding compound according to one of the preceding claims, **characterised in that**
copolyamide a) is composed of the following monomers:
a1) 5 to 44.5% by mol of at least one diamine selected from the group consisting of bis(4-amino-3-methylcyclohexyl)methane, bis(4-aminocyclohexyl)methane, bis(4-amino-3-ethylcyclohexyl)methane, bis(4-amino-3,5-dimethylcyclohexyl) methane, 2,2-bis(p-aminocyclohexyl)propane and mixtures hereof,
a2) 0.5 to 30% by mol of 1,6-hexanediamine,
a3) 16 to 45% by mol of isophthalic acid,
a4) 0 to 22.5% by mol of terephthalic acid,
a5) 10 to 20% by mol of laurinlactam,
a6) 0 to 15% by mol of a1) to a5) of different further monomers,
the molar content of isophthalic acid a3) being at least equal to the content of terephthalic acid a4), and
the sum of monomers a1) to a6) producing 100% by mol, and
the sum of all the diamine monomers corresponding substantially to the sum of all the dicarboxylic acid monomers.

6. Polyamide moulding compound according to one of the preceding claims, **characterised in that**
copolyamide a) is composed of the following monomers:
a1) 18.5 to 39% by mol of at least one diamine selected from the group consisting of bis(4-amino-3-methylcyclohexyl)methane, bis(4-aminocyclohexyl)methane, bis(4-amino-3,5-dimethylcyclohexyl)methane and mixtures hereof,
a2) 5 to 22% by mol of 1,6-hexanediamine
a3) 20.25 to 44% by mol of isophthalic acid,
a4) 0 to 22% by mol of terephthalic acid,
a5) 12 to 19% by mol of laurinlactam,
in particular preferred, the copolyamide is composed of the following monomers:
a1) 22 to 31% by mol of bis(4-amino-3-methylcyclohexyl)methane and 0.1 to 2.0% by mol of bis(4-aminocyclohexyl) methane,
a2) 9 to 20% by mol of 1,6-hexanediamine,
a3) 20.25 to 21.75% by mol of isophthalic acid,
a4) 20.25 to 21.75% by mol of terephthalic acid,
a5) 13 to 19% by mol of laurinlactam,
most particularly preferred, the copolyamide is composed of the following monomers:
a1) 24 to 29% by mol of bis(4-amino-3-methylcyclohexyl)methane and 0.5 to 1.5% by mol of bis(4-aminocyclohexyl) methane,
a2) 11 to 17% by mol of 1,6-hexanediamine,
a3) 20.5 to 21.5% by mol of isophthalic acid,
a4) 20.5 to 21.5% by mol of terephthalic acid,
a5) 14 to 18% by mol of laurinlactam,
the molar content of isophthalic acid a3) being at least equal to the content of terephthalic acid a4), and
the sum of monomers a1) to a5) producing 100% by mol, and
the sum of all the diamine monomers corresponding substantially to the sum of all the dicarboxylic acid monomers.

7. Polyamide moulding compound according to one of the claims 1 to 5, **characterised in that**
the copolyamide is composed of the following monomers:
a1) 22 to 30% by mol of bis(4-amino-3-methylcyclohexyl) methane,
a2) 11 to 22% by mol of 1,6-hexanediamine,
a3) 22 to 26% by mol of isophthalic acid,
a4) 18 to 19% by mol of terephthalic acid,
a5) 13 to 19% by mol of laurinlactam,
preferably the copolyamide is composed of the following monomers:
a1) 22 to 29% by mol of bis(4-amino-3-methylcyclohexyl) methane,
a2) 12 to 20% by mol of 1,6-hexanediamine,
a3) 22 to 25% by mol of isophthalic acid,
a4) 18 to 19% by mol of terephthalic acid,
a5) 14 to 18% by mol of laurinlactam,
the sum of monomers a1) to a5) producing 100% by mol, and
the sum of all the diamine monomers corresponding substantially to the sum of all the dicarboxylic acid monomers.

8. Polyamide moulding compound according to one of the preceding claims, **characterised in that**
the polyamide moulding compound consists of components a) to d).

9. Polyamide moulding compound according to one of the preceding claims, **characterised in that**
the at least one monomeric lactam according to component c) is caprolactam or laurinlactam, and/or
the polyamide moulding compound comprises 0.1 to 10% by weight, preferably 0.5 to 6% by weight and particularly preferably 1.5 to 4% by weight, relative to the total weight of the polyamide moulding compound, of laurinlactam in monomeric form as component c), and/or **in that**
the polyamide moulding compound comprises 0.1 to 10% by weight, preferably 1.5 to 6% by weight and particularly preferably 2 to 4.5% by weight, relative to the total weight of the polyamide moulding compound, of polyamide 12 as component c).

10. Polyamide moulding compound according to one of the preceding claims, **characterised in that**
the polyamide moulding compound comprises at least one additive, in particular selected from the group consisting of inorganic and organic stabilisers, in particular antioxidants, antiozonants, light protection agents, UV stabilisers, UV absorbers or UV blockers, lubricants, colourants, marking means, pigments, carbon black, graphite, photochromic agents, antistatic agents, mould-release agents, condensation catalysts, chain regulators, defoamers, antiblocking means, optical brighteners, halogen-containing flame retardants, halogen-free flame retardants, natural layer silicates, synthetic layer silicates, metallic pigments, metal flakes, metal-coated particles, fillers, nanoscale fillers with a particle size of at most 100 nm and mixtures thereof.

11. Polyamide moulding compound according to one of the preceding claims, **characterised in that**
the at least one glass filler b) is selected from the group consisting of fibres, ground fibres, particles, flakes, balls, hollow balls and mixtures hereof, preferably consisting of fibres, particles, flakes and mixtures thereof.

12. Polyamide moulding compound according to one of the preceding claims, **characterised in that**
the glass type of glass filler b) is selected from the group consisting of A-glass, C-glass, D-glass, E-glass, ECR-glass, M-glass, R-glass, S-glass, T-glass and mixtures thereof.

13. Polyamide moulding compound according to one of the preceding claims, **characterised in that**
the fibres of the glass filler b) are selected from the group consisting of cut fibres, endless fibres and mixtures thereof,
the fibres having a cross-section which is round, oval, elliptical, square or rectangular.

14. Polyamide moulding compound according to one of the preceding claims, **characterised in that**
• the proportion of component a) in the polyamide moulding compound is in the range of 55 to 89.8% by weight, preferably 65 to 82.5% by weight and particularly preferably 70 to 78% by weight, relative to the total weight of the polyamide moulding compound, and/or
• the proportion of component b) in the polyamide moulding compound is in the range of 10 to 40% by weight, preferably 15 to 30% by weight and particularly preferably 18 to 25% by weight, relative to the total weight of the polyamide moulding compound, and/or
• the proportion of component c) in the polyamide moulding compound is in the range of 0.1 to 10% by weight, preferably 2 to 9% by weight and particularly preferably 3 to 7% by weight, relative to the total weight of the polyamide moulding compound, and/or
• the proportion of component d) in the polyamide moulding compound is in the range of 0.1 to 15% by weight, preferably 0.5 to 6% by weight and particularly preferably 1 to 4% by weight, relative to the total weight of the polyamide moulding compound.

15. Polyamide moulding compound according to one of the preceding claims, **characterised in that** the polyamide moulding compound
• has a tearing strength, determined according to ISO 527, of at least 80 MPa, preferably at least 100 MPa and particularly preferably at least 120 MPa, and/or
• has a breaking elongation, determined according to ISO 527, of at least 1.5%, preferably at least 2.0% and particularly preferably at least 2.5%, and/or
• has a modulus of elasticity in tension, determined according to ISO 527, of at least 4,000 MPa, preferably at least 5,000 MPa and particularly preferably at least 6,000 MPa, and/or
• has a Charpy impact strength at 23°C, determined according to ISO 179/2eU, of at least 20 kJ/m², preferably at least 25 kJ/m² and particularly preferably at least 28 kJ/m², and/or
• has a Charpy notch impact strength at 23°C, determined according to ISO 179/2eA, of at least 6.0 kJ/m², preferably at least 6.5 kJ/m² and particularly preferably at least 7.2 kJ/m².

16. Moulded article producible from a polyamide moulding compound according to one of the claims 1 to 15.

17. Moulded article according to claim 16, **characterised in that**
the moulded article is selected from the group consisting of components of mobile phones, tablets, housings of electronic devices, decorative parts in vehicles and the household, covers, visible surfaces, backlit components, screens, containers, vehicle keys, leisure and outdoor articles.

## Revendications

1. Mélange à mouler de polyamides contenant les composants suivants :
a) 50 à 95 % en poids d'un copolyamide amorphe unique, constitué des monomères suivants,
a1) 0,1 à 47,9 % en moles d'au moins une diamine choisie dans le groupe consistant en le bis(4-amino-3-méthyl-cyclohexyl)méthane, le bis(4-amino-cyclohexyl)méthane, le bis(4-amino-3-éthyl-cyclohexyl)méthane, le bis(4-amino-3,5-diméthyl-cylohexyl)méthane, le 2,2-bis(p-amino-cyclohexyl)propane, le 1,3-bis(aminométhyl)cyclohexane, le 1,4-bis(aminométhyl)cyclohexane, le 1,3-diaminocyclohexane, le 1,4-diaminocyclohexane, le bis(4-amino-2,3-diméthyl-cyclohexyl)méthane, l'isophoronediamine, le 1,6-diamino-2,2,4-triméthylhexane, le 1,6-diamino-2,4,4-triméthylhexane, le 2,5-bis(aminométhyl)norbornane, le 2,6-bis(aminométhyl)norbornane, le 2,5-diaminonorbornane, le 2,6-diaminonorbornane et les mélanges de ceux-ci,
a2) 0,1 à 40 % en moles de 1,6-hexanediamine,
a3) 9 à 48 % en moles d'acide isophtalique,
a4) 0 à 24 % en moles d'acide téréphtalique,
a5) 4 à 35 % en moles de laurolactame,
a6) 0 à 30 % en moles d'autres monomères différents de a1) à a5),
dans lequel la teneur en moles en l'acide isophtalique a3) est au moins égale à la teneur en l'acide téréphtalique a4), et
dans lequel la somme des monomères a1) à a6) est de 100 % en moles, et
dans lequel des excès de monomères de diamine ou de monomères d'acide dicarboxylique sont autorisés à raison d'un maximum de 3 %,
b) 5 à 50 % en poids d'au moins un charge de verre,
c) 0 à 15 % en poids d'au moins d'au moins un lactame monomère et/ou de polyamide 12,
d) 0 à 19 % en poids d'additifs,
la somme des composants a) à d) étant de 100 % en poids.

2. Mélange à mouler de polyamides selon la revendication 1, **caractérisé en ce que** le voile du mélange à mouler de polyamides, mesuré selon ASTM D1003 sur un objet moulé fabriqué à partir du mélange à mouler de polyamides (plaques de 2 mm d'épaisseur, ayant une largeur et une longueur de 60 x 60 mm), est d'au moins 15 %, de préférence d'au moins 20 % et d'une manière particulièrement préférée d'au moins 30 % inférieur au voile d'un autre mélange à mouler de polyamides qui, pour ce qui concerne la nature et la quantité des composants a) à d) et en option des autres composants, ne présente pas de différence avec le premier mélange à mouler de polyamides, mais s'en écarte par le fait que les monomères a1) à a6) ne forment pas exactement un copolyamide, mais par le fait que l'on est en présence d'un mélange d'un ou plusieurs polyamides et/ou d'un ou plusieurs copolyamides formés à partir de ces monomères.

3. Mélange à mouler de polyamides selon l'une des revendications précédentes, **caractérisé en ce que** les autres monomères a6) sont choisis dans le groupe consistant en la méta-xylylènediamine, la para-xylylènediamine, les diamines aliphatiques linéaires ou ramifiées ayant 6 à 22 atomes de carbone, les acides dicarboxyliques aliphatiques linéaires ou ramifiés ayant 4 à 22 atomes de carbone, les acides dicarboxyliques cycloaliphatiques ayant 6 à 22 atomes de carbone, l'acide naphtalènedicarboxylique, les acides gras dimères ayant 36, 44 ou 54 atomes de carbone, les lactames ayant 4 à 11 atomes de carbone ou les lactames ayant 13 à 15 atomes de carbone, les acides ω-aminés ayant 4 à 15 atomes de carbone et les mélanges de ceux-ci.

4. Mélange à mouler de polyamides selon l'une des revendications précédentes, **caractérisé en ce que**
la transparence, mesurée selon ASTM D1003 sur un objet moulé fabriqué à partir du mélange à mouler de polyamides (plaques de 2 mm d'épaisseur ayant une largeur et une longueur de 60 x 60 mm), est d'au moins 75 %, de préférence d'au moins 80 % et d'une manière particulièrement préférée d'au moins 85 %, et/ou
le voile, mesuré selon ASTM D1003 sur un objet moulé fabriqué à partir du mélange à mouler de polyamides (plaques de 2 mm d'épaisseur ayant une largeur et une longueur de 60 x 60 mm), est au maximum de 70 %, de préférence au maximum de 50 %, d'une manière particulièrement préférée au maximum de 40 % et surtout de préférence au maximum de 30 %.

5. Mélange à mouler de polyamides selon l'une des revendications précédentes, **caractérisé en ce que**
le copolyamide a) est constitué des monomères suivants :
a1) 5 à 44,5 % en moles d'au moins une diamine choisie dans le groupe consistant en le bis(4-amino-3-méthyl-cyclohexyl)méthane, le bis(4-amino-cyclohexyl)méthane, le bis(4-amino-3-éthyl-cyclohexyl)méthane, le bis(4-amino-3,5-diméthyl-cyclohexyl)méthane, le 2,2-bis(p-amino-cyclohexyl)propane et les mélanges de ceux-ci,
a2) 0,5 à 30 % en moles de 1,6-hexanediamine,
a3) 16 à 45 % en moles d'acide isophtalique,
a4) 0 à 22,5 % en moles d'acide téréphtalique,
a5) 10 à 20 % en moles de laurolactame,
a6) 0 à 15 % en moles d'autres monomères différents de a1) à a5),
dans lequel la teneur en moles en l'acide isophtalique a3) est au moins égale à la teneur en l'acide téréphtalique a4), et
dans lequel la somme des monomères a1) à a6) est de 100 % en moles, et
dans lequel des excès de monomères de diamine ou de monomères d'acide dicarboxylique sont autorisés à raison d'un maximum de 3 %,

6. Mélange à mouler de polyamides selon l'une des revendications précédentes, **caractérisé en ce que**
le copolyamide est constitué des monomères suivants :
a1) 18,5 à 39 % en moles d'au moins un diamine choisie dans le groupe consistant en le bis(4-amino-3-méthyl-cyclohexyl)méthane, le bis(4-amino-cyclohexyl)méthane, le bis(4-amino-3,5-diméthyl-cyclohexyl)méthane et les mélanges de ceux-ci,
a2) 5 à 22 % en moles de 1,6-hexanediamine,
a3) 20,25 à 44 % en moles d'acide isophtalique,
a4) 0 à 22 % en moles d'acide téréphtalique,
a5) 12 à 19 % en moles de laurolactame,
d'une manière particulièrement préférée, le copolyamide est constitué des monomères suivants :
a1) 22 à 31 % en moles de bis(4-amino-3-méthyl-cyclohexyl)méthane et 0,1 à 2,0 % en moles de bis(4-amino-cyclohexyl)méthane,
a2) 9 à 20 % en moles de 1,6-hexanediamine,
a3) 20,25 à 21,75 % en moles d'acide isophtalique,
a4) 20,25 à 21,75 % en moles d'acide téréphtalique,
a5) 13 à 19 % en moles de laurolactame,
surtout de préférence, le copolyamine est constitué des monomères suivants :
a1) 24 à 29 % en moles de bis(4-amino-3-méthyl-cyclohexyl)méthane et 0,5 à 1,5 % en moles de bis(4-amino-cyclohexyl)méthane,
a2) 11 à 17 % en moles de 1,6-hexanediamine,
a3) 20,5 à 21,5 % en moles d'acide isophtalique,
a4) 20,5 à 21,5 % en moles d'acide téréphtalique,
a5) 14 à 18 % en moles de laurolactame,
dans lequel la teneur en moles en l'acide isophtalique a3) est au moins égale à la teneur en l'acide téréphtalique a4), et
dans lequel la somme des monomères a1) à a5) est de 100 % en moles, et
dans lequel des excès de monomères de diamine ou de monomères d'acide dicarboxylique sont autorisés à raison d'un maximum de 3 %,

7. Mélange à mouler de polyamides selon l'une des revendications 1 à 5, **caractérisé en ce que**
le copolyamine est constitué des monomères suivants :
a1) 22 à 30 % en moles de bis(4-amino-3-méthyl-cyclohexyl)méthane,
a2) 11 à 22 % en moles de 1,6-hexanediamine,
a3) 22 à 26 % en moles d'acide isophtalique,
a4) 18 à 19 % en moles d'acide téréphtalique,
a5) 13 à 19 % en moles de laurolactame,
de préférence, le copolyamine est constitué des monomères suivants :
a1) 22 à 29 % en moles de bis(4-amino-3-méthyl-cyclohexyl)méthane,
a2) 12 à 20 % en moles de 1,6-hexanediamine,
a3) 22 à 25 % en moles d'acide isophtalique,
a4) 18 à 19 % en moles d'acide téréphtalique,
a5) 14 à 18 % en moles de laurolactame
dans lequel la somme des monomères a1) à a5) est de 100 % en moles, et
dans lequel des excès de monomères de diamine ou de monomères d'acide dicarboxylique sont autorisés à raison d'un maximum de 3 %,

8. Mélange à mouler de polyamides selon l'une des revendications précédentes, **caractérisé en ce que** le mélange à mouler de polyamines est constitué des composants a) à d).

9. Mélange à mouler de polyamides selon l'une des revendications précédentes, **caractérisé en ce que**
l'au moins un lactame monomère selon le composant c) est le caprolactame ou le laurolactame, et/ou
le mélange à mouler de polyamides contient 0,1 à 10 % en poids, de préférence 0,5 à 6 % en poids et d'une manière particulièrement préférée 1,5 à 4 % en poids, par rapport au poids total du mélange à mouler de polyamides, de laurolactame sous forme monomère en tant que composant c), et/ou que
le mélange à mouler de polyamides contient 0,1 à 10 % en poids, de préférence 1,5 à 6 % en poids et d'une manière particulièrement préférée 2 à 4,5 % en poids, par rapport au poids total du mélange à mouler de polyamides, de polyamide 12 en tant que composant c).

10. Mélange à mouler de polyamides selon l'une des revendications précédentes, **caractérisé en ce que** le mélange à mouler de polyamides contient au moins un additif, en particulier choisi dans le groupe consistant en les stabilisants inorganiques et organiques, en particulier les antioxydants, les ozonants, les photoprotecteurs, les stabilisants UV, les absorbants UV ou les agents bloquant les UV, les lubrifiants, les colorants, les agents de marquage, les pigments, le noir de carbone, le graphite, les agents photochromes, les antistatiques, les agents de démoulage, les catalyseurs de condensation, les régulateurs de chaîne, les antimoussants, les agents anti-adhérence de contact, les azurants optiques, les agents d'ignifugation halogénés, les agents d'ignifugation non halogénés, les phyllosilicates naturels, les phyllosilicates synthétiques, les pigments, les paillettes métalliques, les particules métallisées, les charges et les mélanges de ceux-ci.

11. Mélange à mouler de polyamides selon l'une des revendications précédentes, **caractérisé en ce que** l'au moins une charge de verre b) est choisie dans le groupe consistant en les fibres, les fibres broyées, les particules, les flocons de verre, les billes creuses et les mélanges de ceux-ci, en étant de préférence constituée de fibres, de particules, de flocons et de mélanges de ceux-ci.

12. Mélange à mouler de polyamides selon l'une des revendications précédentes, **caractérisé en ce que** le type de verre de la charge de verre b) est choisi dans le groupe consistant en le verre a), le verre C, le verre D, le verre E, le verre ECR, le verre M, le verre R, le verre S, le verre T et les mélanges de ceux-ci.

13. Mélange à mouler de polyamides selon l'une des revendications précédentes, **caractérisé en ce que**
les fibres de la charge de verre b) sont choisies dans le groupe consistant en les fibres coupées, les fibres continues et les mélanges de celles-ci,
les fibres présentant une section transversale de forme circulaire, ovale, elliptique, polygonale ou rectangulaire.

14. Mélange à mouler de polyamides selon l'une des revendications précédentes, **caractérisé en ce que**
- la proportion du composant a) dans le mélange à mouler de polyamides est comprise dans la plage de 55 à 89,8 % en poids, de préférence de 65 à 82,5 % en poids et d'une manière particulièrement préférée de 70 à 78 % en poids par rapport au poids total du mélange à mouler de polyamides, et/ou
- la proportion du composant b) dans le mélange à mouler de polyamides est comprise dans la plage de 10 à 40 % en poids, de préférence de 15 à 30 % en poids et d'une manière particulièrement préférée de 18 à 25 % en poids par rapport au poids total du mélange à mouler de polyamides, et/ou
- la proportion du composant c) dans le mélange à mouler est comprise dans la plage de 0,1 à 10 % en poids, de préférence de 2 à 9 % en poids et d'une manière particulièrement préférée de 3 à 7 % en poids par rapport au poids total du mélange à mouler de polyamides, et/ou
- la proportion du composant d) dans le mélange à mouler de polyamides est comprise dans la plage de 0,1 à 15 % en poids, de préférence de 0,5 à 6 % en poids et d'une manière particulièrement préférée de 1 à 4 % en poids par rapport au poids total du mélange à mouler de polyamides.

15. Mélange à mouler de polyamides selon l'une des revendications précédentes, **caractérisé en ce que** le mélange à mouler de polyamides présente :
- une résistance à la traction, déterminée selon ISO 527, d'au moins 80 MPa, de préférence d'au moins 100 MPa et d'une manière particulièrement préférée d'au moins 120 MPa, et/ou
- un allongement à la rupture par traction, déterminé selon ISO 527, d'au moins 1,5 %, de préférence d'au moins 2,0 % et d'une manière particulièrement préférée d'au moins 2,5 %, et/ou
- un module d'élasticité en traction, déterminé selon ISO 527, d'au moins 4000 MPa, de préférence d'au moins 5000 MPa et d'une manière particulièrement préférée d'au moins 6000 MPa, et/ou
- une résistance au choc Charpy à 23 °C, déterminée selon ISO 179/2eU, d'au moins 20 kJ/m², de préférence d'au moins 25 kJ/m² et d'une manière particulièrement préférée d'au moins 28 kJ/m², et/ou
- une résistance au choc Charpy sur barreau entaillé à 23 °C, déterminée selon ISO 179/2eA, d'au moins 6,0 kJ/m², de préférence d'au moins 6,5 kJ/m² et d'une manière particulièrement préférée d'au moins 7,2 kJ/m².

16. Objet moulé pouvant être fabriqué à partir d'un mélange à mouler de polyamides selon l'une des revendications 1 à 15.

17. Objet moulé selon la revendication 16, **caractérisé en ce que** l'objet moulé est choisi dans le groupe consistant en les composants de téléphone mobile, les tablettes, les boîtiers d'appareils électroniques, les éléments décoratifs dans les véhicules et à usage domestique, les couvercles, les surfaces de parement, les composants rétroéclairés, les diaphragmes, les récipients, les clefs de voiture, les articles de loisir et d'extérieur.
